# EUROPEAN PATENT SPECIFICATION

(11) **EP 4 614 366 B1**
(45) Date of publication and mention of the grant of the patent: **19.08.2026**
(21) Application number: 25161914.4
(22) Date of filing: 05.03.2025
(51) Int. Cl.: G06F 21/55, G06F 21/57

(54) **ATTACKER-FOCUSED GRANULAR ACTION DISRUPTION**
STÖRUNG VON ANGREIFERFOKUSSIERTER GRANULARER AKTION
INTERRUPTION D'ACTION GRANULAIRE FOCALISÉE SUR UN AGRESSEUR

(30) Priority: 06.03.2024 US 202418597157
(43) Date of publication of application: 10.09.2025
(73) Proprietor: Microsoft Technology Licensing, LLC, Redmond, WA 98052-6399 (US)
(72) Inventor: NEUVIRTH, Hani Hana, Redmond, 98052-6399 (US); ZUKERMAN, Jonatan, Redmond, 98052-6399 (US); MAOR, Tal Joseph, Redmond, 98052-6399 (US); PARTYKA, Pawel Marek, Redmond, 98052-6399 (US); DAVRAEV, Daniel, Redmond, 98052-6399 (US); HAIK, Eyal, Redmond, 98052-6399 (US)
(74) Representative: Page White Farrer

(56) References cited:
- GB-A- 2 593 509
- US-A1- 2009 307 777
- A SPADARO: "Event correlation for detecting advanced multi-stage cyber-attacks", 28 June 2013 (2013-06-28), pages 1 - 151, XP055427632, Retrieved from the Internet <URL:https://repository.tudelft.nl/islandora/object/uuid:d7d43988-f1b0-4549-8b44-3b5c9f1f401b/datastream/OBJ/download> [retrieved on 20171122]

## Description

### BACKGROUND

Attacks on a computing system may take many different forms, including some forms which are difficult to predict, and forms which may vary from one situation to another. Accordingly, one of the guiding principles of cybersecurity is "defense in depth". In practice, defense in depth is often pursed by forcing attackers to encounter multiple different kinds of security mechanisms at multiple different locations around or within the computing system. No single security mechanism is able to detect every kind of cyberattack, able to determine the scope of an attack or vulnerability, or able to end every detected cyberattack. But sometimes combining and layering a sufficient number and variety of defenses and investigative tools will prevent an attack, deter an attacker, or at least help limit the scope of harm from an attack or a vulnerability.

To implement defense in depth, cybersecurity professionals consider the different kinds of attacks that could be made against a computing system, and the different vulnerabilities the system may include. They select defenses based on criteria such as: which attacks are most likely to occur, which attacks are most likely to succeed, which attacks are most harmful if successful, which defenses are in place, which defenses could be put in place, and the costs and procedural changes and training involved in putting a particular defense in place or removing a particular vulnerability to attack. They investigate the scope of an attack, and try to detect vulnerabilities before they are exploited in an attack. Some defenses or investigations might not be feasible or cost-effective for the particular computing system. However, improvements in cybersecurity remain possible, and worth pursuing.

UK patent application GB 2 593509 A teaches a method comprising obtaining event data representing a plurality of events that have occurred in a first computer system which has undergone a successful attack and identifying, from the plurality of events, at least one event that formed part of an unsuccessful attack on the first computer system. The unsuccessful attach is used to identify at least one vulnerability of a second computer system.

US patent application US 2009/307777 teaches a method for predicting a network attack action, including obtaining information of an attack action according to a change of network status, selecting a subsequent attack action which has the most possibility to happen, with a largest occurrence number among the subsequent attack actions corresponding to the attack action.

The M.Sc. thesis by A Sparado: "Event correlation for detecting advanced multi-stage cyber-attacks" teaches the design of a model to correlate detectable suspicious events.

### SUMMARY

Some embodiments address technical challenges arising from efforts to prevent or reduce damage caused by cyberattacks. One challenge is how to rapidly and accurately determine that a computing system is under attack. Another challenge is how to provide security in a computing system while permitting legitimate use of the computing system. Other technical challenges are also addressed herein.

Some embodiments taught herein provide or utilize an attacker-focused granular action disruption (AFGAD) functionality, which observes that a precursor is satisfied by a user account or user session. The precursor includes one or more computing system actions, and in some scenarios the precursor also includes one or more computing system states. The AFGAD functionality discerns that an incrimination action, which is associated with the precursor, has not yet been performed by the user account or session as a follow-up after the precursor. The incrimination action is more likely, by a specified amount, to be performed by an attacker-driven account or session than by a non-attacker-driven account or session.

The AFGAD functionality blocks the user account or session from performing the incrimination action. The incrimination action block has a finer granularity than simply disabling the user account, for example. In particular, the block maintains a permission for the user account or session to *attempt* execution of the incrimination action, even though actual execution of the incrimination action is blocked. In some scenarios, the user account or session does attempt to perform the blocked incrimination action. The attempt indicates the user account or session is being driven by (i.e., performed on behalf of) an attacker, so the AFGAD functionality restricts the user account or session further, up to and including disabling the user account or session in some scenarios.

In some embodiments, establishing that the incrimination action is more likely, by the specified amount, to be performed by an attacker-driven account or session than by a non-attacker-driven account or session helps the AFGAD functionality rapidly and accurately determine that the computing system is under attack. In some embodiments, blocking at a fine granularity around the incrimination action instead of blocking more broadly helps the AFGAD functionality provide security while still permitting legitimate use of the computing system by accounts and sessions that are not attacker-driven.

Other technical activities, technical characteristics, and technical benefits pertinent to teachings herein will also become apparent to those of skill in the art. The examples given are merely illustrative. This Summary is not intended to identify key features or essential features of the claimed subject matter, nor is it intended to be used to limit the scope of the claimed subject matter. Rather, this Summary is provided to introduce - in a simplified form - some technical concepts that are further described below in the Detailed Description. Subject matter scope is defined with claims as properly understood, and to the extent this Summary conflicts with the claims, the claims should prevail.

### BRIEF DESCRIPTION OF THE DRAWINGS

A more particular description will be given with reference to the attached drawings. These drawings only illustrate selected aspects and thus do not fully determine coverage or scope.
Figure 1 is a diagram illustrating aspects of computer systems and also illustrating configured storage media, including some aspects generally suitable for embodiments which include or use attacker-focused granular action disruption (AFGAD) functionality;
Figure 2 is a block diagram illustrating aspects of a family of enhanced systems which are each configured with AFGAD functionality;
Figure 3 is a block diagram illustrating aspects of another family of systems which are each enhanced with AFGAD functionality, including some systems with software which upon execution performs a first family of AFGAD methods;
Figure 4 is a block diagram illustrating some aspects of AFGAD;
Figure 5 is a flowchart illustrating a second family of AFGAD methods;
Figure 6 is a flowchart illustrating a third family of AFGAD methods; and
Figure 7 is a flowchart further illustrating AFGAD methods, and incorporating as options the steps of Figures 2, 3, 5, and 6.

### DETAILED DESCRIPTION

### Overview

Some teachings described herein were motivated by technical challenges faced and insights gained during efforts to improve technology for cloud attack detection and response security tools. These challenges and insights provided some motivations, but the teachings herein are not limited in their scope or applicability to these particular errors, tools, motivational challenges, solutions, or insights.

Some security tools will determine that a computing system is under attack only after a non-empty set of one or more conditions is met, e.g., there have been five successive attempts to log into a given account using wrong passwords, or ten new user accounts have been created by a particular admin account within the past ten minutes, or more than fifty megabytes of data have been transmitted from a given user email account to an IP address never previously used by that email account. When the security tool determines the system is under attack by a particular account, the security tool disables the account to prevent further harm.

However, security tools are often configured to let all activity continue in an account until there is a high level of confidence that the activity is part of an attack. For example, tools rarely if ever disable an account after only a single failure to enter the correct password. After all, a legitimate user sometimes enters an incorrect password once, or perhaps more than once. But at some point, which is determined by the tool's configuration, the number of failed login attempts is interpreted as evidence of an attack instead of being treated as a result of innocent errors.

By waiting until there is a high level of confidence that the activity is part of an attack, the security tool greatly reduces the risk of interfering with legitimate activity in the computing system. A user who accidentally types the wrong password because caps lock is on is allowed to promptly and easily fix their mistake. The user is not compelled to undergo a time-consuming password recovery and re-authentication process, for example, when the security tool has concluded no attack is underway.

Unfortunately, by waiting to intervene until there is a high level of confidence that account activity is part of an attack, some security tools also increase the risk that significant damage will be done before the tool intervenes. If the tool waits until fifty megabytes of data have been transmitted to a new IP address, and only then determines a data exfiltration attack is underway, then the confidentiality of fifty megabytes of data is already lost, or at least at serious risk. Even if the data is encrypted, an attacker will be able to attempt decryption at a time and place chosen by the attacker. More generally, when protective intervention is postponed, the potential damage from an attack includes loss of: data integrity, computing system resource availability, confidentiality, privacy, economic value, safety, or reliability, for example.

Some embodiments described herein utilize or provide a method of attacker-focused granular action disruption (AFGAD) in a computing system. The method includes automatically: observing data representing a performance by a user account of a sequence of user account action(s), referred to here as a precursor; discerning that the precursor is associated with a further user account action not yet performed by the user account, the further user account action referred to here as an incrimination action; establishing that the incrimination action is more likely to be performed by an attacker-driven account than by a non-attacker-driven account; and blocking the user account from performing the incrimination action, while maintaining a permission for the user account to attempt execution of the incrimination action. A sequence is also sometimes referred to as a chain.

This AFGAD functionality has the technical benefits of detecting an attack rapidly and limiting damage from the attack. The only potential damage done before the user account is characterized as attacker-driven is whatever was done by the precursor actions. In general, intervention can be faster because the level of confidence (that an incrimination action is malevolent) which is sufficient to trigger a protective constraint on the account (e.g., block the incrimination action) can be lower than the level of confidence deemed sufficient to disable the account. Account characterization relies not only on a sequence of alerts or events, as in some other tools, but also leverages a computationally established fact that the incrimination action is more likely to be performed by an attacker-driven account than by a non-attacker-driven account.

Moreover, a confidence level for intervening on the basis that performance of the precursor means an attack is underway can be a lower confidence level than a level that triggers disabling the account, because even if an attack is not underway the disruption caused by tool intervention is finely focused around the incrimination action. In some scenarios, only the incrimination action itself is blocked. In some scenarios, only actions which are similar to the incrimination action are blocked, e.g., commands which are similar in that they create / spawn / fork a process are blocked. In either case, the entire account itself is not blocked, e.g., is not disabled.

Because the incrimination action is more likely to be performed by an attacker-driven account than by a non-attacker-driven account, another technical benefit is that disruption of legitimate account activity is avoided. Blocking the incrimination action likely does not block legitimate account activity. Even when the account's precursor activity is legitimate, blocking prior to an incrimination action attempt is limited to no more than blocking the incrimination action itself and actions which are similar to the incrimination action. This disruption is much smaller than the disruption from disabling the account, for example.

In some scenarios, an embodiment also detects an attempt by the user account to perform the blocked incrimination action. The attempt corroborates the presence of an attack. In response to detecting the attempt, the embodiment restricts a capability of the user account in addition to the blocking the user account from performing the incrimination action. In some cases, after the incrimination action is attempted, an embodiment disables the account, or imposes additional security constraints on the account, or does both.

This AFGAD attack corroboration functionality has the technical benefit of corroborating a suspicion of attack without putting additional resources at risk. The suspicion arises from performance of the precursor. Execution of the incrimination action has been blocked, so any risk to resources from execution of the incrimination action is avoided. However, the attempt itself corroborates the suspicion that an attack is underway, because the incrimination action is more likely to be performed by an attacker-driven account than by a non-attacker-driven account.

In some embodiments, establishing that the incrimination action is more likely to be performed by an attacker-driven account than by a non-attacker-driven account includes confirming that an attacker likelihood of the incrimination action is N times a non-attacker likelihood of the incrimination action. N is also referred to herein as a focus factor. In some embodiments, the attacker likelihood is computed from a likelihood of the incrimination action being performed by an attacker-driven account, and the non-attacker likelihood is computed from a likelihood of the incrimination action being performed by at least one account that is not categorized as an attacker-driven account.

Some suitable values for N include 1 plus epsilon, 3, 4, 5, 10, 15, 20, 50, 100, 500, and 1000. In a given computing system, epsilon is the smallest positive number which is representable digitally in that computing system. Values of N which are one or less fail to distinguish attacker-driven accounts from non-attacker-driven accounts, while values of N greater than 1000 often create an unacceptable risk of damage by overemphasizing non-intervention.

This AFGAD focus factor functionality has the technical benefit of providing a tunable mechanism which balances potential benefits of security tool intervention against potential inconvenience to legitimate users. Tuning the size of focus factor N changes a balance between blocking the incrimination action after the precursor and allowing the incrimination action to execute after the precursor. Blocking it reduces security risk but increases potential inconvenience to legitimate users and hence increases a lost productivity risk, whereas leaving the incrimination action unblocked increases the security risk but reduces potential inconvenience to legitimate users and the risk to productivity. The larger the focus factor N is, the more the balance favors allowing account activities to continue without intervention by the security tool to block the incrimination action.

In some embodiments, the blocking is completed before any security alert is automatically raised in response to the performance of the sequence of the precursor (a.k.a. the precursor sequence). In some embodiments, the blocking is completed before any security alert which is automatically raised in response to the performance of the sequence of the precursor has been designated a part of an incident, e.g., an attack. Each of these AFGAD functionality operational scenarios illustrate the technical benefit of detecting an attack rapidly. The confidence level sufficient for blocking is lower in these scenarios than the confidence level sufficient for raising the security alert, or the confidence level sufficient for designating the alert part of the security incident, or both.

In some embodiments, no alert is raised in the computing system in response to the performance of the sequence of the precursor, but the incrimination action is nonetheless blocked. This AFGAD functionality operational scenario illustrates the technical benefit of detecting an attack which other tools in the computing system do not detect. In some cases, the incrimination action is blocked and the system is thus protected, even though no alert is raised by performance of the precursor. For example, in some cases no alert is raised because no alert predicated on the precursor exists in the system. The AFGAD functionality thus provides protection that other tools do not.

In some embodiments, establishing that the incrimination action is more likely to be performed by an attacker-driven account than by a non-attacker-driven account includes getting a likelihood that the user account has performed the incrimination action prior to the performance of the sequence of the precursor by the user account. This AFGAD account-specific functionality has the technical benefit of helping to protect the system against attacks without interfering with legitimate activity by a particular user account that happens to be more likely than an average user account to perform the incrimination action.

As one example, it is not unusual for an administrator account to update a server by retrieving a file from an internet location and then uploading that file to the server. But in many environments, it is unusual for a nonadministrator account which is not driven by an attacker to retrieve a file from an internet location and then upload that file to a server. Accordingly, when an AFGAD establishing step utilizes a likelihood computed primarily or solely from the administrator account's server upload history, blocking a legitimate server upload by the administrator account is less likely than a blocking that relies on an average of non-attacker-driven accounts.

In discussions herein, an AFGAD disruption tuple includes a precursor and at least one corresponding incrimination action. In some embodiments, descriptions of the precursor and the incrimination action are formed at least in part by computationally analyzing at least one of: a non-empty set of alerts, a non-empty set of events and alerts, or a non-empty event log. This AFGAD disruption tuple formation functionality has the technical benefit of automatically and efficiently identifying precursors and corresponding incrimination action(s) which are not inherently constrained by the set of alerts defined in the computing system. Accordingly, intervention thresholds for blocking incrimination actions are potentially lower than the thresholds for raising alerts; the lower confidence levels permit faster protective intervention than intervention based on alerts alone. Also, a different set of risky situations is recognizable, beyond the situations defined by alert conditions. In some scenarios, the incrimination action is blocked and the system is thus protected, even though no alert is raised by performance of the precursor.

These and other benefits will be apparent to one of skill from the teachings provided herein.

### Operating Environments

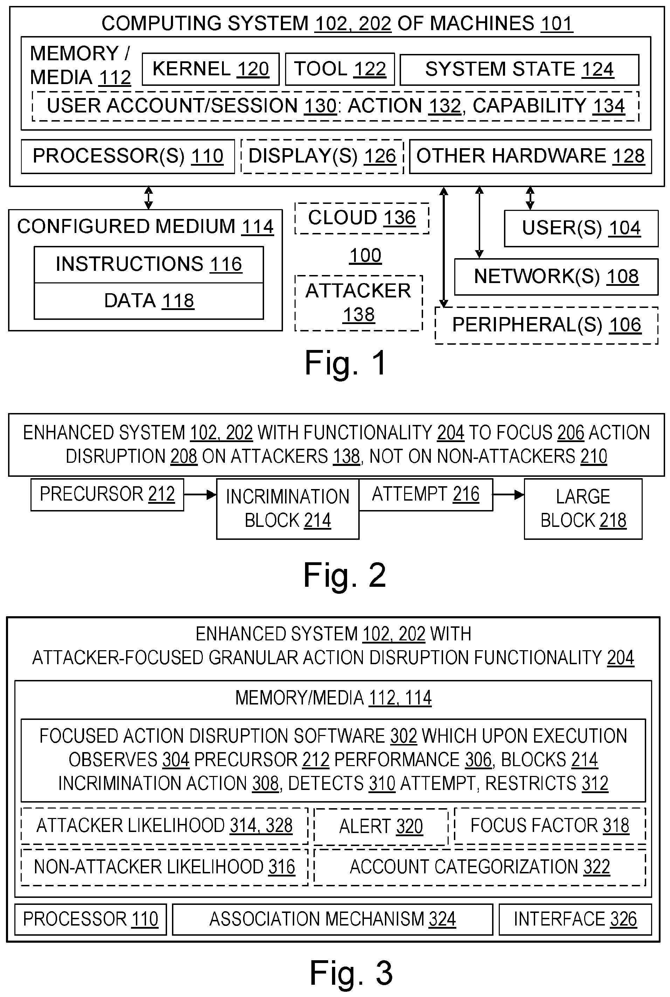

With reference to Figure 1, an operating environment 100 for an embodiment includes at least one computer system 102. The computer system 102 may be a multiprocessor computer system, or not. An operating environment may include one or more machines in a given computer system, which may be clustered, client-server networked, and/or peer-to-peer networked within a cloud 136. An individual machine is a computer system, and a network or other non-empty group of cooperating machines is also a computer system. A given computer system 102 may be configured for end-users, e.g., with applications, for administrators, as a server, as a distributed processing node, and/or in other ways.

Human users 104 sometimes interact with a computer system 102 user interface by using displays 126, keyboards 106, and other peripherals 106, via typed text, touch, voice, movement, computer vision, gestures, and/or other forms of I/O. Virtual reality or augmented reality or both functionalities are provided by a system 102 in some embodiments. A screen 126 is a removable peripheral 106 in some embodiments and is an integral part of the system 102 in some embodiments. The user interface supports interaction between an embodiment and one or more human users. In some embodiments, the user interface includes one or more of: a command line interface, a graphical user interface (GUI), natural user interface (NUI), voice command interface, or other user interface (UI) presentations, presented as distinct options or integrated.

System administrators, network administrators, cloud administrators, security analysts and other security personnel, operations personnel, developers, testers, engineers, auditors, and end-users are each a particular type of human user 104. In some embodiments, automated agents, scripts, playback software, devices, and the like running or otherwise serving on behalf of one or more humans also have user accounts, e.g., service accounts. Sometimes a user account is created or otherwise provisioned as a human user account but in practice is used primarily or solely by one or more services; such an account is a de facto service account. Although a distinction could be made, "service account" and "machine-driven account" are used interchangeably herein with no limitation to any particular vendor.

The distinction between human-driven accounts and machine-driven accounts is a different distinction than the distinction between attacker-driven accounts and non-attacker driven accounts. A particular human-driven account may be attacker-driven, or non-attacker-driven, at a given point in time. Similarly, a particular machine-driven account may be attacker-driven, or non-attacker-driven, at a given point in time.

Accounts and sessions are each associated herein with reference numeral 130. Although for convenience, examples and claims herein often speak in terms of accounts, "account" means "account or session or both" unless stated otherwise. In this disclosure, including in the claims and elsewhere, a statement about activity by "the user account or the user session" does not mean that both the user account and the user session must be present. Instead, such a statement is to be understood as a pair of corresponding but distinct statements given as alternatives, one statement being about activity by the user account, and the other statement being about activity by the user session. Likewise, a characterization of "the user account or the user session" does not mean that both the user account and the user session must be present. Instead, such a characterization is to be understood as a pair of corresponding but distinct characterizations given as alternatives, one characterizing the user account, and the other characterizing the user session.

Storage devices or networking devices or both are considered peripheral equipment in some embodiments and part of a system 102 in other embodiments, depending on their detachability from the processor 110. In some embodiments, other computer systems not shown in Figure 1 interact in technological ways with the computer system 102 or with another system embodiment using one or more connections to a cloud 136 and/or other network 108 via network interface equipment, for example.

Each computer system 102 includes at least one processor 110. The computer system 102, like other suitable systems, also includes one or more computer-readable storage media 112, also referred to as computer-readable storage devices 112. In some embodiments, tools 122 include security tools or software applications, on mobile devices 102 or workstations 102 or servers 102, editors, compilers, debuggers and other software development tools, as well as APIs, browsers, or webpages and the corresponding software for protocols such as HTTPS, for example. Files, APIs, endpoints, and other resources may be accessed by an account or non-empty set of accounts, user or non-empty group of users, IP address or non-empty group of IP addresses, or other entity. Access attempts may present passwords, digital certificates, tokens or other types of authentication credentials.

Storage media 112 occurs in different physical types. Some examples of storage media 112 are volatile memory, nonvolatile memory, fixed in place media, removable media, magnetic media, optical media, solid-state media, and other types of physical durable storage media (as opposed to merely a propagated signal or mere energy). In particular, in some embodiments a configured storage medium 114 such as a portable (i.e., external) hard drive, CD, DVD, memory stick, or other removable nonvolatile memory medium becomes functionally a technological part of the computer system when inserted or otherwise installed, making its content accessible for interaction with and use by processor 110. The removable configured storage medium 114 is an example of a computer-readable storage medium 112. Some other examples of computer-readable storage media 112 include built-in RAM, ROM, hard disks, and other memory storage devices which are not readily removable by users 104. For compliance with current United States patent requirements, neither a computer-readable medium nor a computer-readable storage medium nor a computer-readable memory nor a computer-readable storage device is a signal per se or mere energy under any claim pending or granted in the United States.

The storage device 114 is configured with binary instructions 116 that are executable by a processor 110; "executable" is used in a broad sense herein to include machine code, interpretable code, bytecode, and/or code that runs on a virtual machine, for example. The storage medium 114 is also configured with data 118 which is created, modified, referenced, and/or otherwise used for technical effect by execution of the instructions 116. The instructions 116 and the data 118 configure the memory or other storage medium 114 in which they reside; when that memory or other computer readable storage medium is a functional part of a given computer system, the instructions 116 and data 118 also configure that computer system. In some embodiments, a portion of the data 118 is representative of real-world items such as events manifested in the system 102 hardware, product characteristics, inventories, physical measurements, settings, images, readings, volumes, and so forth. Such data is also transformed by backup, restore, commits, aborts, reformatting, and/or other technical operations.

Although an embodiment is described as being implemented as software instructions executed by one or more processors in a computing device (e.g., general purpose computer, server, or cluster), such description is not meant to exhaust all possible embodiments. One of skill will understand that the same or similar functionality can also often be implemented, in whole or in part, directly in hardware logic, to provide the same or similar technical effects. Alternatively, or in addition to software implementation, the technical functionality described herein can be performed, at least in part, by one or more hardware logic components. For example, and without excluding other implementations, some embodiments include one of more of: chiplets, hardware logic components 110, 128 such as Field-Programmable Gate Arrays (FPGAs), Application-Specific Integrated Circuits (ASICs), Application-Specific Standard Products (ASSPs), System-on-a-Chip components, Complex Programmable Logic Devices (CPLDs), and similar components. In some embodiments, components are grouped into interacting functional modules based on their inputs, outputs, or their technical effects, for example.

In addition to processors 110 (e.g., CPUs, ALUs, FPUs, TPUs, GPUs, and/or quantum processors), memory / storage media 112, peripherals 106, and displays 126, some operating environments also include other hardware 128, such as batteries, buses, power supplies, wired and wireless network interface cards, for instance. The nouns "screen" and "display" are used interchangeably herein. In some embodiments, a display 126 includes one or more touch screens, screens responsive to input from a pen or tablet, or screens which operate solely for output. In some embodiments, peripherals 106 such as human user I/O devices (screen, keyboard, mouse, tablet, microphone, speaker, motion sensor, etc.) will be present in operable communication with one or more processors 110 and memory 112.

In some embodiments, the system includes multiple computers connected by a wired and/or wireless network 108. Networking interface equipment 128 can provide access to networks 108, using network components such as a packet-switched network interface card, a wireless transceiver, or a telephone network interface, for example, which are present in some computer systems. In some, virtualizations of networking interface equipment and other network components such as switches or routers or firewalls are also present, e.g., in a software-defined network or a sandboxed or other secure cloud computing environment. In some embodiments, one or more computers are partially or fully "air gapped" by reason of being disconnected or only intermittently connected to another networked device or remote cloud. In particular, AFGAD functionality 204 could be installed on an air gapped network 108 and then be updated periodically or on occasion using removable media 114, or not be updated at all. Some embodiments also communicate technical data or technical instructions or both through direct memory access, removable or nonremovable volatile or nonvolatile storage media, or other information storageretrieval and/or transmission approaches.

One of skill will appreciate that the foregoing aspects and other aspects presented herein under "Operating Environments" form part of some embodiments. This document's headings are not intended to provide a strict classification of features into embodiment and non-embodiment feature sets.

One or more items are shown in outline form in the Figures, or listed inside parentheses, to emphasize that they are not necessarily part of the illustrated operating environment or all embodiments, but interoperate with items in an operating environment or some embodiments as discussed herein. It does not follow that any items which are not in outline or parenthetical form are necessarily required, in any Figure or any embodiment. In particular, Figure 1 is provided for convenience; inclusion of an item in Figure 1 does not imply that the item, or the described use of the item, was known prior to the current disclosure.

In any later application that claims priority to the current application, reference numerals may be added to designate items disclosed in the current application. Such items may include, e.g., software, hardware, steps, processes, systems, functionalities, mechanisms, devices, data structures, kinds of data, settings, parameters, components, computational resources, programming languages, tools, workflows, or algorithm implementations, or other items in a computing environment, which are disclosed herein but not associated with a particular reference numeral herein. Corresponding drawings may also be added.

### More About Systems

Figure 2 illustrates a computing system 102 configured by one or more of the AFGAD functionality enhancements taught herein, resulting in an enhanced system 202. In some embodiments, this enhanced system 202 includes a single machine, a local network of machines, machines in a particular building, machines used by a particular entity, machines in a particular datacenter, machines in a particular cloud, or another computing environment 100 that is suitably enhanced. Figure 2 items are discussed at various points herein.

Figure 3 shows some aspects of some enhanced systems 202. Like Figure 2, Figure 3 is not a comprehensive summary of all aspects of enhanced systems 202 or all aspects of AFGAD functionality 204. Nor is either figure a comprehensive summary of all aspects of an environment 100 or system 202 or other context of an enhanced system 202, or a comprehensive summary of any aspect of functionality 204 for potential use in or with a system 102. Figure 3 items are discussed at various points herein.

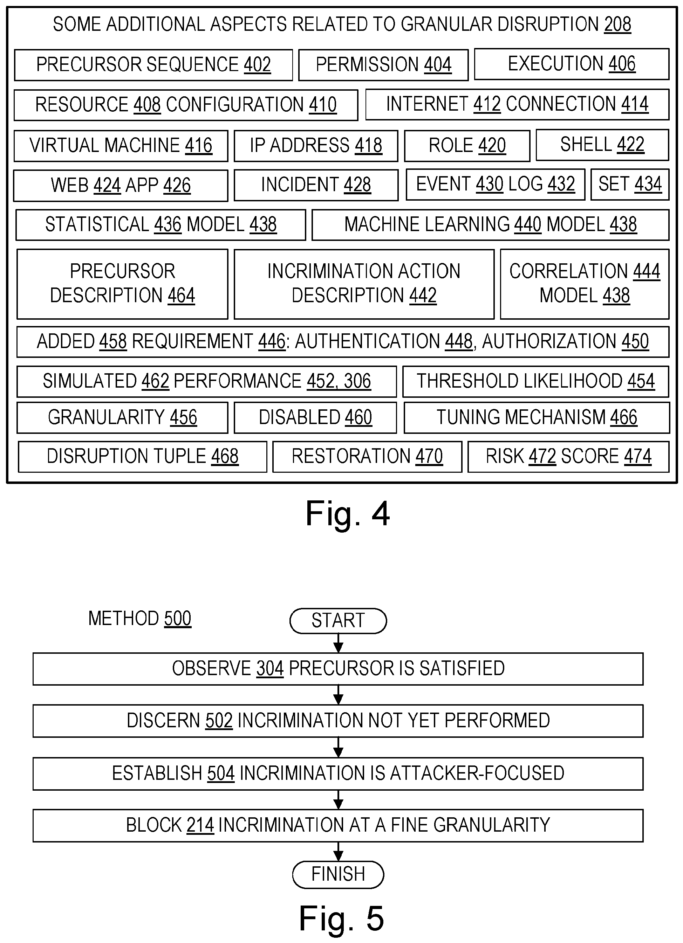

Figure 4 shows some aspects of granular disruption 208 and some related items or processes. This is not a comprehensive summary of all aspects of AFGAD or of granular disruption generally. Figure 4 items are discussed at various points herein.

The other figures are also relevant to systems 202. Figures 5 to 7 are flowcharts which illustrate some methods of AFGAD functionality 204 operation in some systems 202.

In some embodiments, the enhanced system 202 is networked through an interface 326. In some, an interface 326 includes hardware such as network interface cards, software such as network stacks, APIs, or sockets, combination items such as network connections, or a combination thereof.

Some embodiments include a computing system 202 which is configured to utilize or provide AFGAD functionality 204. The system 202 includes a digital memory set 112 including at least one digital memory 112, and a processor set 110 including at least one processor 110. The processor set is in operable communication with the digital memory set. A digital memory set is a set which includes at least one digital memory 112, also referred to as a memory 112. The word "digital" is used to emphasize that the memory 112 is part of a computing system 102, not a human person's memory. The word "set" is used to emphasize that the memory 112 is not necessarily in a single contiguous block or of a single kind, e.g., a memory 112 may include hard drive memory as well as volatile RAM, and may include memories that are physically located on different machines 101. Similarly, the phrase "processor set" is used to emphasize that a processor 110 is not necessarily confined to a single chip or a single machine 101. Sets are non-empty unless described otherwise.

In this example, a first description 464 resides in and configures the at least one digital memory 112. The first description 464 represents a precursor 212. The precursor includes first data 118 representing a sequence 402 of one or more user account or user session actions 132. A second description 442 also resides in and configures the at least one digital memory 112. The second description includes second data 118 representing a different user account or user session action 132 which is referred to here as an incrimination action 308. The incrimination action is distinct from the sequence of the precursor, in that the incrimination action includes an action 132 that is not part of the sequence.

The processor set is configured by data and instructions to perform an attacker-focused granular action disruption method 700. The AFGAD method 700 includes (a) observing 304 third data 118 which represents a performance 306 of the sequence of the precursor by a user account or user session 130, (b) discerning 502 fourth data 118 which represents that the incrimination action was not performed 306 by the user account or user session after the performance 306 of the sequence of the precursor by the user account or user session, or discerning 502 a lack of fifth data 118 which represents that the incrimination action has been performed 306 by the user account or user session after the performance 306 of the sequence of the precursor by the user account or user session, or both, (c) establishing 504 that, after the performance of the sequence of the precursor, the incrimination action is at least three times more likely to be performed by an attacker-driven account or session 322 than by a non-attacker-driven account or session 322, and (d) blocking 214 the user account or user session from performing the incrimination action, while (e) maintaining 602 a permission 404 for the user account or user session to attempt execution of the incrimination action, and (f) maintaining 602 a permission 404 for the user account or user session to execute an additional action 132 other than the incrimination action and other than any part of the sequence of the precursor.

In some embodiments, the establishing 504 includes getting 730 a likelihood 328 that the user account or user session has performed the incrimination action prior to the performance of the sequence of the precursor by the user account or user session. The gotten 730 likelihood 328 is an account-specific or session-specific likelihood 328 unless stated otherwise; in some cases the likelihood 328 is instead specific to a particular non-empty set of accounts or sessions, such as admin accounts, or accounts having a particular privilege level or a particular permission.

In some embodiments, the at least one processor is also configured to form 734 the first description and the second description at least in part by computationally analyzing 732 at least one of: a non-empty set 434 of alerts 320, a non-empty set 434 of events 430 and alerts 320; or a non-empty event log 432. Herein, forming 734 includes creating or modifying or both; formation 734 is not limited to an initial creation. Events 430 include any observed occurrence in a computing system, whereas alerts 320 represent occurrences which are atypical, anomalous, or otherwise noteworthy with respect to cybersecurity risk 472.

In some embodiments, the at least one processor is also configured to form 734 the first description and the second description at least in part by correlating 444, with a correlation model 438, candidate precursor actions 132 with a candidate incrimination action 132. In some embodiments, the correlation model 438 includes at least one of: a statistical 436 model 438, or a machine learning 440 model 438.

In some embodiments, the at least one processor is also configured to form 734 the first description and the second description at least in part by filtering 738 out a candidate incrimination action 132 after determining that the candidate incrimination action is more likely, by a threshold likelihood amount 454, to be performed by a non-attacker-driven user account or user session than by an attacker-driven user account or user session. In effect, the threshold likelihood 454 operates like the focus factor 318, that is, as a tuning mechanism 466 to balance security risk 472 against legitimate user activity disruption risk 472. The smaller the threshold likelihood amount 454 is, the more the balance favors blocking 214 with the attendant risk of disrupting legitimate user activity.

In some embodiments, the establishing 504 includes confirming 702 that an attacker likelihood 314 of the incrimination action is N times a non-attacker likelihood 316 of the incrimination action, where N is at least fifteen, the attacker likelihood is computed from a likelihood of the incrimination action being performed by an attacker-driven account or session 322, and the non-attacker likelihood is computed from a likelihood of the incrimination action being performed by at least one account or user session 130 other than the user account or user session 130 that is not categorized 322 as an attacker-driven account or session 322.

Some embodiments define the likelihood 328 of an action X being performed by an account Y in terms of a frequency, e.g., (number of times account Y performed the action X) divided by (total number of actions performed by account Y). In some embodiments, an action's likelihood 328 of interest is a probability that an attacker-driven account will perform the action divided by an overall probability to perform the action. One such calculation for a disruption tuple << precursor :: action-X >> 468, where precursor represents one or more events (e.g., actions), is ((number of attacker-driven performances of action-X within one day of the occurrence of the precursor) divided by (number of attacker-driven accounts identified in computer system activity data of the past month)) divided by ((number of non-attacker user-driven accounts that performed the action-X per day) divided by ((number of non-attacker user-driven accounts identified in the computer system activity data in the past month) times (number of days in the computer system activity data))). The attackers 138 are a subset of the users 104, so this calculation's result will always be smaller less than (when not every user is an attacker) or equal to (when all users are attackers) the value one.

These are only example likelihood 328 calculations. Other calculations of an action's likelihood 328 of being performed by an attacker-driven account or session versus being performed by a regular non-attacker-driven account or session are also used in some embodiments. Depending on the embodiment and scenario, a likelihood 328 is implemented as a probability in a range between zero and one, or as a value in a specified range (e.g., 18 out of 100), or as an odds ratio (e.g., 1000:1).

The syntax << precursor :: incrimination action >> used herein is for convenience and clarity. A given embodiment, or a discussion of a given embodiment (e.g., in product documentation, source code, or marketing materials) is not required to use this syntax in order to accurately describe disruption tuples or their functional equivalents. Other suitable syntaxes are possible.

In some scenarios the blocking is undone, e.g., permission to perform the incrimination action is restored 470. Two examples of proactive automatic blocking 214 undo 470 are: restoring permission after a specified delay, and restoring permission after a specified decrease in an account's risk score 474.

Other system embodiments are also described herein, either directly or derivable as system versions of described processes or configured media, duly informed by the extensive discussion herein of computing hardware.

Although specific AFGAD architecture examples are shown in the Figures, an embodiment may depart from those examples. For instance, items shown in different Figures may be included together in an embodiment, items shown in a Figure may be omitted, functionality shown in different items may be combined into fewer items or into a single item, items may be renamed, or items may be connected differently to one another.

Examples are provided in this disclosure to help illustrate aspects of the technology, but the examples given within this document do not describe all of the possible embodiments. A given embodiment may include additional or different kinds of AFGAD functionality, for example, as well as different technical features, aspects, mechanisms, software, expressions, operational sequences, commands, data structures, programming environments, execution environments, environment or system characteristics, proxies, or other functionality consistent with teachings provided herein, and may otherwise depart from the particular examples provided.

### Processes (a.k.a. Methods)

Processes (which are also be referred to as "methods" in the legal sense of that word) are illustrated in various ways herein, both in text and in drawing figures. Figures 5, 6, and 7 each illustrate a family of methods 500, 600, and 700 respectively, which are performed or assisted by some enhanced systems, such as some systems 202 or another AFGAD functionality enhanced system as taught herein. Method families 500 and 600 are each a proper subset of method family 700. Moreover, activities identified in block diagrams in Figures 2 and 3 include method steps, e.g., blocking 214 an incrimination action after a precursor, restricting 218 an account after the account attempts to perform a blocked incrimination action, steps taken by software 302, and so on. These method steps are likewise incorporated into method (a.k.a. process) 700. These diagrams and flowcharts are merely examples; as noted elsewhere, any operable combination of steps that are disclosed herein may be part of a given embodiment when called out in a claim.

Technical processes shown in the Figures or otherwise disclosed will be performed automatically, e.g., by an enhanced system 202, unless otherwise indicated. Related non-claimed processes may also be performed in part automatically and in part manually to the extent action by a human person is implicated, e.g., in some situations a human 104 types or speaks in natural language an input such as a particular value for a focus factor 318. Such input is captured in the system 202 as digital text, or captured as digital audio which is then converted to digital text. Natural language means a language that developed naturally, such as English, French, German, Hebrew, Hindi, Japanese, Korean, Spanish, etc., as opposed to designed or constructed languages such as HTML, Python, SQL, or other programming languages. Regardless, no process contemplated as an embodiment herein is entirely manual or purely mental; none of the claimed processes can be performed solely in a human mind or on paper. Any claim interpretation to the contrary is squarely at odds with the present disclosure.

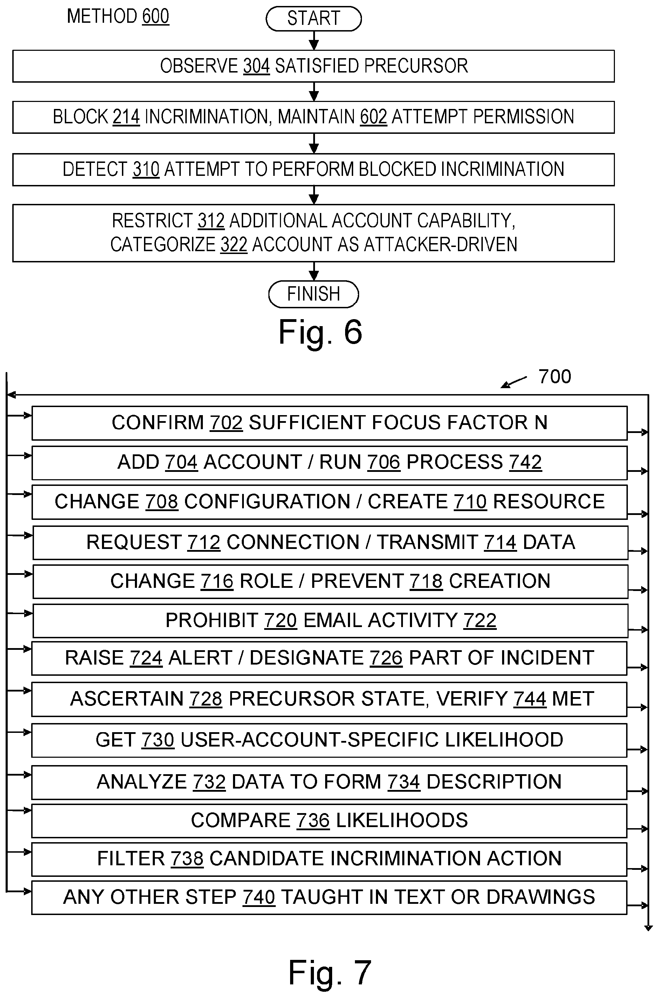

In a given embodiment zero or more illustrated steps of a process may be repeated, perhaps with different parameters or data to operate on. Steps in an embodiment may also be done in a different order than the top-to-bottom order that is laid out in Figure 7. Figure 7 is a supplement to the textual and figure drawing examples of embodiments provided herein and the descriptions of embodiments provided herein. In the event of any alleged inconsistency, lack of clarity, or excessive breadth due to an interpretation of Figure 7, the content of this disclosure shall prevail over that interpretation of Figure 7.

Arrows in process or data flow figures indicate allowable flows; arrows pointing in more than one direction thus indicate that flow may proceed in more than one direction. Steps may be performed serially, in a partially overlapping manner, or fully in parallel within a given flow. In particular, the order in which flowchart 700 action items are traversed to indicate the steps performed during a process may vary from one performance instance of the process to another performance instance of the process. The flowchart traversal order may also vary from one process embodiment to another process embodiment. Steps may also be omitted, combined, renamed, regrouped, be performed on one or more machines, or otherwise depart from the illustrated flow, provided that the process performed is operable and conforms to at least one claim of an application or patent that includes or claims priority to the present disclosure. To the extent that a person of skill considers a given sequence S of steps which is consistent with Figure 7 to be non-operable, the sequence S is not within the scope of any claim. Any assertion otherwise is contrary to the present disclosure.

Some embodiments provide or utilize a method 700 of attacker-focused 206 granular action disruption in a computing system 102, e.g., in a computer network 108. This method includes automatically: observing 304 data 118 representing a performance 306, in the computing system by a user account or user session 130, of a sequence 402 of one or more user account or user session actions 132, the sequence referred to here as a precursor 212; discerning 502 that the precursor is associated, by an association mechanism 324 in the computing system, with a further action 132 which has not yet been performed by the user account or user session after the performance of the sequence of the precursor, the further action referred to here as an incrimination action 308; establishing 504 that, after the performance of the sequence of the precursor, the incrimination action is more likely to be performed by an attacker-driven account or session 322 than by a non-attacker-driven account or session 322; and blocking 214 the user account or user session from performing the incrimination action in the computing system, while maintaining 602 in the computing system a permission 404 for the user account or user session to attempt execution 406 of the incrimination action, and maintaining 602 in the computing system a permission 404 for the user account or user session to execute an additional action other than the incrimination action and other than any part of the precursor. Some examples of an association mechanism 324 include data structures that implement disruption tuples (pairs are 2-tuples), such as records, lists, arrays, trees, key-value pairs, and lookup tables.

In this example, the disruption 208 caused by the blocking 214 is both attacker-focused and granular. The disruption is attacker-focused 206 because the blocked incrimination action is more likely to be performed by an attacker-driven account or session 322 than by a non-attacker-driven account or session 322. The disruption is granular 456 because an attempt to execute the incrimination action is not blocked (that permission is maintained). The disruption is also granular because the additional action, which is not the incrimination action and also not part of the precursor, is not blocked (that permission is also maintained). In particular, the account or session is not disabled 460. Disabling an account or session is not a granular disruption.

In some embodiments, the method 700 further includes: detecting 310 an attempt 216 by the user account or user session to perform the blocked incrimination action; and in response to detecting the attempt, restricting 312 a capability 134 of the user account or user session in addition to the blocking the user account or user session from performing the incrimination action. Capabilities 134 include, e.g., resource access, resource creation, resource deletion, and resource relocation functionality.

In some embodiments, the establishing 504 includes confirming 702 that an attacker likelihood 314 of the incrimination action is N times a non-attacker likelihood 316 of the incrimination action, where N is at least five. N is also referred to as the focus factor 318. The attacker likelihood is computed from a likelihood 328 of the incrimination action being performed by an attacker-driven account or session 322, and the non-attacker likelihood is computed from a likelihood 328 of the incrimination action being performed by at least one account or session that is not categorized 322 as an attacker-driven account or session 322.

In some embodiments, blocking 214 the user account or user session from performing the incrimination action includes at least one of: blocking 214 an action which is configured to upon execution add 704 a user account to the computing system; blocking 214 an action which is configured to upon execution run 706 a specified process 742; blocking 214 an action which is configured to upon execution change 708 a resource 408 configuration 410 in the computing system; blocking 214 an action which is configured to upon execution create 710 a resource 408 in a cloud computing environment 136; blocking 214 an action which is configured to upon execution request 712 an internet connection 414; or blocking 214 an action which is configured to upon execution transmit 714 data over an internet connection 414.

In some embodiments, blocking 214 the user account or user session from performing the incrimination action includes at least one of: changing 716 an association in the computing system between a role 420 and the user account 130; prohibiting changing 716 an association in the computing system between a role 420 and a different user account 130; preventing 718 creation of a virtual machine 416; prohibiting 720 email activity 722 from a specified IP address 418; prohibiting 720 email activity 722 from a specified shell 422; or prohibiting 720 email activity 722 from a specified web 424 app 426.

In some embodiments, an example of changing a role of the user is changing from 'Global Admin' to 'Admin Reader', thus removing permission to create new users. In some embodiments, an example of prohibiting changing a role of another user is a high privilege role assignment on a guest user. In some embodiments, an example of creation of a virtual machine is a mass compute creation. In some embodiments, an example of prohibiting email activity from a specified IP address is prohibiting Exchange Online activities from an IP address using OWA and PowerShell. In some embodiments, this is also an example of prohibiting email activity from a specified shell, and an example of prohibiting email activity from a specified web app.

More generally, in some scenarios an action is blocked indirectly, while in other scenarios the action is blocked directly. In a system which lacks a permission specifically focused on a particular action, some actions are nonetheless susceptible to indirect blockage 214 by way of a different action. For example, a system S does not support blocking new user addition specifically, but S does allow role changes, and one allowed role change to a role R has the effect of blocking new user addition because the role R lacks permission to add new users.

In some embodiments, the blocking 214 is completed before any security alert 320 is automatically raised 724 in response to the performance of the sequence of the precursor. In some embodiments, the blocking 214 is completed before any security alert 320 which is automatically raised 724 in response to the performance of the sequence of the precursor has been designated 726 a part of an incident 428. In some, both of the foregoing statements are accurate.

In some embodiments, no alert 320 is raised 724 in the computing system in response to the performance 306 of the sequence of the precursor.

In some embodiments, the method 700 includes: ascertaining 728 that a description of a precursor state 124 is also associated in the computing system with the incrimination action; and verifying 744 that the precursor state is present in the computing system before blocking 214 the user account or user session from performing the incrimination action in the computing system.

In other words, in some embodiments or scenarios the precursor includes both states 124 and events 430 (e.g., one or more actions 132). In other embodiments or scenarios, states 124 are not part of the precursor, but the precursor does include one or more events 430.

In some embodiments, examples of precursor 212 states 124 include which kernel 120 is installed, which application version is running, counts of past events, data indicating the presence of a particular type of ongoing security campaign or an increase in the chance of a certain attack, data indicating a user role, data indicating permissions granted to a user account or a user session, data indicating resources accessible to a user account or a user session, or an event, e.g., receipt by a machine of an outside connection.

### Configured Storage Media

Some embodiments include a configured computer-readable storage medium 112. Some examples of storage medium 112 include disks (magnetic, optical, or otherwise), RAM, EEPROMS or other ROMs, and other configurable memory, including in particular computer-readable storage media (which are not mere propagated signals). In some embodiments, the storage medium which is configured is in particular a removable storage medium 114 such as a CD, DVD, or flash memory. A general-purpose memory, which is be removable or not, and is volatile or not, depending on the embodiment, can be configured in the embodiment using items such as likelihoods 328, focus factor 318, threshold likelihood amount 454, tuning mechanism 466, association mechanism 324, account categorizations 322, disruption tuples 468, correlation models 438, and AFGAD software 302, in the form of data 118 and instructions 116, read from a removable storage medium 114 and/or another source such as a network connection, to form a configured storage medium. The foregoing examples are not necessarily mutually exclusive of one another. The configured storage medium 112 is capable of causing a computer system 202 to perform technical process steps for providing or utilizing AFGAD functionality 204 as disclosed herein. The Figures thus help illustrate configured storage media embodiments and process (a.k.a. method) embodiments, as well as system and process embodiments. In particular, any of the method steps illustrated in Figures 5 to 7, or otherwise taught herein, may be used to help configure a storage medium to form a configured storage medium embodiment.

Some embodiments use or provide a computer-readable storage device 112, 114 configured with data 118 and instructions 116 which upon execution 406 by a processor 110 cause a computing system 202 to perform a method 700 of attacker-focused granular action disruption in a computing system. This method 700 includes automatically: observing 304 data representing a performance, in the computing system by a user account or a user session, of a sequence of one or more events or actions, the sequence referred to here as a precursor; discerning 502 that the precursor is associated, by an association mechanism in the computing system, with a further action which has not yet been performed by the user account or user session after the performance of the sequence of the precursor, the further action referred to here as an incrimination action; establishing 504 that, after the performance of the sequence of the precursor, the incrimination action is at least four times as likely to be performed by an attacker-driven account or session as the incrimination action is to be performed by a non-attacker-driven account or session; and blocking 214 the user account or user session from performing the incrimination action in the computing system, while maintaining in the computing system a permission for the user account or user session to attempt execution of the incrimination action, and maintaining in the computing system a permission for the user account or user session to execute an additional action other than the incrimination action and other than any part of the precursor.

In some embodiments, the method further includes detecting 310 an attempt 216 by the user account or user session to perform the blocked incrimination action, and in response to detecting the attempt, restricting 312 a capability 134 of the user account or user session in addition to blocking the user account or user session from performing the incrimination action. In some cases, restricting the capability includes at least one of: disabling 460 the user account or user session; adding 458 an authentication requirement 448 to the user account or user session; adding 458 an authorization requirement 450 to the user account or user session; or simulating 462 to the user account or user session a simulated performance 452 of the blocked incrimination action and not actually performing the blocked incrimination action.

Adding 458 a requirement 446 is an example of a large block 218 but is less disruptive than disabling 460 the user account.

Simulating 462 performance of the blocked incrimination action is less disruptive than a large block 218. Simulation 462 is suitable for use in honeypot scenarios to avoid revealing a security presence to the attacker, and in scenarios where it is more important to find out what the attacker does next than it is to protect the particular resources the attacker can presently access.

In some embodiments, the method includes obtaining 444, at least in part by executing a machine learning model 440, at least one of: a likelihood 314 that the incrimination action is performed by an attacker-driven account or session; or a likelihood 316 that the incrimination action is performed by an account that is not categorized as an attacker-driven account or session.

In some embodiments, the establishing 504 includes establishing that after the performance of the sequence of the precursor (a.k.a. the precursor sequence), the incrimination action is at least ten times as likely to be performed by an attacker-driven account or session as the incrimination action was to be performed by the user account or user session prior to the performance of the sequence of the precursor by the user account or user session.

In some embodiments, the method includes detecting 310 an attempt by the user account or user session to perform the blocked incrimination action; and in response to detecting the attempt, automatically and proactively categorizing 322 the user account as an attacker-driven account or session. Larger disruptions then follow as a result of the categorization.

### Scaling-up Disruption

Additional support for the discussion of AFGAD functionality 204 herein is provided under various headings. However, it is all intended to be understood as an integrated and integral part of the present disclosure's discussion of the contemplated embodiments.

One of skill will recognize that not every part of this disclosure, or any particular details therein, are necessarily required to satisfy legal criteria such as enablement, written description, best mode, novelty, nonobviousness, inventive step, or industrial applicability. Any apparent conflict with any other patent disclosure, even from the owner of the present subject matter, has no role in interpreting the claims presented in this patent disclosure. It is in the context of this understanding, which pertains to all parts of the present disclosure, that examples and observations are offered herein.

Automated disruption can be extremely beneficial in safeguarding user accounts and user sessions from attack, and eliminating delays caused by requiring human approval. However, customers are rightly concerned about the possibility of false-positive detections that lead to business disruption. As a result, automated disruption is generally applied cautiously, concentrating on alerts with an exceptionally high confidence (e.g., >99%). This approach minimizes business disruption from automated disruption, but also substantially limits protective coverage. The limited protection increases the risk of later business disruption resulting from successful attack(s). Regardless, when there is an exceptionally high confidence of an attack, the automated disruption procedures applied are very stringent, such as disabling or locking user accounts. Moreover, the automated disruption is generally initiated only after the user has been verified as an attacker, at which point damage has often already been inflicted.

The present disclosure teaches an Al-based strategy to maximize automated disruption coverage in a timely manner to minimize damage, while maintaining high precision with a low risk to business processes. Some embodiments taught herein utilize or provide AFGAD functionality 204 which performs high resolution adaptive hardening based on a what-if analysis of an action 132 space. This AFGAD functionality 204 disrupts cyberattacks, in particular ways taught herein.

When automating disruption of cyberattacks, there is a risk of misidentification of the driver of an account. In some cases, despite suspicious activity in an account, the user driving the account is a valid user performing non-malicious activity, and therefore disrupting them will disrupt the regular operation of a cloud tenant or other customer. As a result, some cyberattack disruption tools are configured to require very high confidence that a specific user account is being driven maliciously before they employ disruption procedures such as disabling the user account. By the time this confidence is gained, an attacker will often have already managed to cause some damage to the customer, such as deleting files, exfiltrating data, and so on.

Some embodiments taught herein use adaptive hardening in a very granular 456 way at an early stage of an attack to block permissions to actions that, if executed, would incriminate a user as an attacker. A valid user performing non-malicious activity is very unlikely to execute such actions. Thus, malicious activity is blocked without disturbing valid activity of valid users.

Some embodiments determine or receive an indication of a security risk condition 124 precursor 212 associated with a user account or associated with a user session. Based on the security risk condition, some embodiments determine a potentially malicious action 308 that the user account has permission to perform. In some cases, the potentially malicious action 308, which is also referred to as an incrimination action 308, is a privileged action 132, but not necessarily in every case handled by a given embodiment.

With a view toward minimizing attack damage, some embodiments perform a what-if analysis for conditional disruption. This is different than approaches which initiate an automated disruption procedure only when it is highly certain that the user is an attacker. As taught herein, a what-if analysis is applied at an earlier stage to identify downstream alerts that could eventually incriminate the user, when the user account has already displayed signs of risk, e.g., as reflected in one or more action, event, or alert logs or streams.

Consider such a downstream alert that is triggered by a single malicious user operation. By executing this operation, the user would be clearly identified as an attacker. Therefore, permissions to perform this operation can be blocked beforehand. As it is highly unlikely for a legitimate user to perform this operation, no business impact will occur. Furthermore, the attacker initiating this operation effectively provides a signal which incriminates them, thus allowing an embodiment to also employ stringent disruption procedures.

Some embodiments only deprive permissions to execute rare actions, e.g., adding domain federation (in most accounts) or creating a virtual machine (in non-developer accounts or accounts not driven automatically by a scalable application). Regular daily action is not affected. Some embodiments deprive permissions to perform actions that would have raised the risk to a certain threshold if they were executed. The specific threshold is product-dependent in some embodiments, but in many cases this threshold is lower than the threshold that triggers disabling the user account.

Some embodiments utilize or implement a contrapositive rule of logic inference: if A implies B, then not B implies not A. Specifically, if an alert or action A implies an attacker, then no attacker implies no alert or action A. In other words, if the user is not an attacker, then the user will not attempt to execute the action that leads to the alert, and the user won't be impacted by the automated attacker-focused disruption taught herein.

In many cases, alerts do not represent a single isolated action, but rather represent a combination of states and actions. A detection can be broken down into a non-empty set of pairs, consisting of one action and the remaining conditions. The remaining conditions are also referred to as a "partial alert". These pairs are examples of disruption tuples 468, and a partial alert is an example of a precursor 212.

Win some embodiments, when a medium risk user is identified the embodiment identifies a set of alert types 320 that could potentially incriminate them in the future. For each alert type and pair of << partial alert with the remaining conditions :: action >> the embodiment sets a trigger such that once the partial alert is detected the embodiment will remove the user account's permission to execute the action. This way, if all precursor conditions are met, the user account's attempt to execute the action will be blocked. Since this attempt is logged as usual, the regular automated disruption will be invoked, e.g., the user account will be disabled. As a result, an attacker will be disrupted early, while a legitimate user will not be impacted.

Some embodiments form 734 disruption tuples 468. A disruption tuple 468 includes a precursor sequence 402 of user account or user session action(s) 132 and a corresponding incrimination action 308, 132. The precursor and the incrimination action correspond in the sense that execution 406 of the precursor followed by execution 406 of the incrimination action strongly indicates a cyberattack 428. The incrimination action is selected 734, not only because it corresponds to the precursor sequence 402 as part of an attack indication 428, but also because the incrimination action is statistically or presumptively more likely (by a specified measure 454 or 318) to be performed on behalf of an attacker 138 than on behalf of a non-attacker 210. This likelihood 328 of performance pertains to performance of the incrimination action regardless of preceding actions, unless stated otherwise. The likelihood of performance of the incrimination action plus the preceding precursor sequence in combination by an attacker 138 is already much more likely than the likelihood of such performance by a non-attacker 210, because that combination - precursor sequence followed by incrimination action - strongly indicates an attack.

Some disruption tuples 468 include a single incrimination action 308 which chronologically follows the precursor sequence 402, either as a blocked action or as a blocked and attempted action. For example, one disruption tuple in some systems is << authentication with compromised credential(s) :: creation of new user >>.

Some disruption tuples 468 include a sequence of incrimination actions 308 which follow the precursor sequence 402. For example, one disruption tuple in some systems is << risky user alert, access elevation alert, resource quota increase :: virtual machine creation, cryptocurrency computation >>.

Some disruption tuples 468 include a non-empty set of incrimination actions 308, any of which follow the precursor sequence 402. For example, one disruption tuple in some systems is << risky user XDR alert, guest invitation XDR alert :: high privilege role assignment on the guest user OR subscription transfer >>. As another example, in some systems the incrimination action specifies a set of similar actions 132, namely, actions which use different syntax but share a result, e.g., actions which upon execution cause a permission change, actions which upon execution create a process, actions which upon execution create an account, actions which upon execution create a network connection, and so on.

Some embodiments form 734 disruption tuples 468 by analyzing 732 existing high-confidence alerts to identify incrimination actions plus precursor conditions for removing permissions to these incrimination actions.

Some embodiments form 734 disruption tuples 468 by using alert labels and incident labels to identify sets of alerts 320 plus an incrimination action that appear together for a user account, are very likely to happen during attack, and very unlikely to occur for a valid user account in the absence of an attack. Hence, these alerts plus incrimination action tuples identify the user account as an attacker-driven account.

Some embodiments are designed to select the disruption 208 in a very specific way, so that the actions 308 being blocked are unlikely to be attempted by a valid non-attacker 210 user account. Hence, the risk of disturbing regular business processes is low, and AFGAD can be employed even when the confidence that the user is an attacker is not very high, which increases the overall coverage of the protection.

Some embodiments establish 504 (e.g., by calculating a risk score) that the potentially malicious action has a probability, higher than a threshold 454, to be associated with a malicious attack than to be associated with non-malicious activity. For example, in some scenarios when the action's probability of being performed by an attacker is at least 0.5 greater than the probability of the action being performed by a non-attacker the user driving a request to perform the action 308 the action is deemed to be a malicious user. Then the embodiment removes 214 the user account's permission 404 to perform the potentially malicious action 308. The action 308 permission 404 is removed 214 before receipt of a request from the user account to perform the potentially malicious action, or at least before the potentially malicious action has been performed, thereby preventing performance of the action 308.

In some embodiments and scenarios, the permission block 214 is focused on a specific session ID, or a specific IP address or IP address range.

In some embodiments the mechanism used to remove permissions includes a conditional access mechanism, such as an Azure^{®} AD Conditional Access Policy employing a Session Control option, or a cloud access security broker, or a similar mechanism (mark of Microsoft Corporation).

In some scenarios, an embodiment is configured such that if a user sign-ins from an unfamiliar location and the authentication session is classified as risky, then the user is allowed to access an application through a cloud access security broker. In this case, the user account would have read-only access, or would be prevented from downloading or printing, for example.

Some embodiments automatically and proactively restore permissions that were blocked 214, either after a predefined time window, or when a risk score is reduced to a predefined level, or both, for example.

In some embodiments, alerts that are triggered only by states, rather than specific user actions, are excluded from disruption tuples 468. For example, an alert that sets a threshold on a count of a specific operation (e.g., number of files deleted by the user), is excluded from use as the entirety of a precursor. In some embodiments, alerts where the user is the victim, rather than the attacker, such as clicking on a malicious URL, contributes to the risk, but victim actions are excluded from use as incrimination actions.

It may happen that an automatic disruption reveals to an attacker the fact that the embodiment has characterized the account as attacker-driven. In response, the attacker might reduce or delay malicious activity. Regardless, the AFGAD will at least slow down the attack, providing security personnel more time to investigate. AFGAD functionality helps ensure that attack disruption measures are taken in a timely manner, thus reducing or preventing damage caused by incriminated attackers. Moreover, since this disruption 208 is very specific, an organization will often be more tolerant of it. AFGAD functionality also allows a security tool to employ less stringent thresholds, which contributes to the protective coverage.

In one example scenario, a suspicious sign-in alert increases a user's risk evaluation 474 to medium. AFGAD what-if functionality 204 in the system identifies the following downstream activities 308 that will be sufficient to incriminate the user: a "Suspicious email deletion activity" alert, a "Suspicious Email Forwarding Activity" alert. As an automated disruption setup, a non-empty set of the following pairs 468 of << partial rule :: action >> is derived 734: << conditions from the alert :: email deletion >>, << conditions from the alert :: email forwarding >>. The AFGAD functionality also adds the user account to lists referenced by disruption per each pair 468. In this example, within the disruption mechanism, when any of the partial rules are detected, a disruption is activated, which removes the user account's permission to create a forwarding rule or delete emails correspondingly. In the general case, some precursors 212 include not only alert(s) but also include additional condition(s) 124, to be triggered.

Some embodiments increase protection coverage while maintaining disruption precision. Some embodiments look for a specific activity by looking for particular keywords in activity log entries or activity stream entries, before blocking. Some embodiments block only after learning details of an action, depending on the alert disruption pair 468. Some block the action only when all the remaining conditions in the partial alert were met, and performing the action will raise an alert. Some embodiments simulate carrying out the blocked action.

In some embodiments and scenarios, when a user account attempts to perform one of the incrimination actions 308, the account receives an insufficient permissions error and a corresponding log record is created. This triggers the stringent disruption that disables the user account.

In some embodiments and scenarios, in response to receiving a request from the user account to perform the potentially malicious action, or another indication that the user attempted to perform the potentially malicious action 308, an embodiment disables 460 all permissions associated with the user account.

In some embodiments and scenarios, in response to receiving an indication of a lower risk condition (e.g., an input indicating the user account can be more trusted), an embodiment restores the user account's permission to perform the potentially malicious action.

In some scenarios, an embodiment sets a trap for an attacker: the embodiment determines that one or more precursor actions have occurred, confirms that a particular potential next action is an incrimination action because it is much more likely to be performed by an attacker than by a non-attacker, and disables the incrimination action while still leaving open a possibility of an attempt to perform the incrimination action, as well as a possibility of other user actions in the account.

Some embodiments use or provide a method of attacker-focused granular action disruption in a computing system, the method including automatically: observing data representing a performance, in the computing system by a user account, of a sequence of one or more user account actions, the sequence referred to here as a precursor; discerning that the precursor is associated, by an association mechanism in the computing system, with a further user account action which has not yet been performed by the user account after the performance of the precursor, the further user account action referred to here as an incrimination action; establishing that, after the performance of the precursor, the incrimination action is more likely to be performed by an attacker-driven account than by a non-attacker-driven account; and blocking the user account from performing the incrimination action in the computing system, while maintaining in the computing system a permission for the user account to attempt execution of the incrimination action, and maintaining in the computing system a permission for the user account to execute an additional user account action other than the incrimination action and other than any part of the precursor.

In some scenarios, the user account attempts to perform the incrimination action after it has performed the precursor. As a result of the attempt, a further restriction is placed on the user account, because the embodiment's level of confidence that the user account is an attacker-driven account increased, due to the user account's attempt to perform the incrimination action. Recall that the embodiment has already established that the incrimination action is more likely to be performed by an attacker-driven account than by a non-attacker-driven account.

To reduce AFGAD response times, some embodiments utilize streamed alerts (a.k.a. detections) instead of logged alerts, or in addition to logged alerts. Some embodiments utilize raw data sources where a targeted disruption can be applied. Some examples include process creation logs where permissions can be removed, or network logs where a firewall rule can be configured to block communication.

Some embodiments distinguish between alert thresholds and disruption thresholds. In addition to analyzing 732 detection rules in their regular form, disruption tuples are obtained in some systems by fine-tuning thresholds in existing detections so that the same detection rule with a certain threshold value will result in an alert, while a tighter threshold will trigger disruption.

Some embodiments form 734 disruption tuples employing a machine learning (ML) approach that uses the alerts as features weighted and directly optimized to the available labels. Beyond alerts and anomalies, some embodiments also use preventable actions and risk lowering actions as features to contribute to ML models' performance.

On top of a risk identification model, some embodiments employ two additional models to help identify the actions 308 to prevent as a means of soft disruption. To calculate a probability that an action is indicative of an attack, some embodiments implement Bayes Theorem and utilize predictions for P(Action | Attacker) and P(Action | ¬Attacker. Then, actions will be disrupted if: P(Attacker) = P(Action | Attacker)/( P(Action | Attacker)+ P(Action | ¬Attacker)) > Threshold. ); "P" is read as "probability", "|" is read as "given", "¬" is read as "not", and "/" means division. This approach can be applied either to user accounts or to user sessions, or both, depending on the available control mechanism(s) for blocking actions.

In addition to this prediction derived from learning on a full population of users, some embodiments verify 730 that the action is anomalous for the specific user whose session or account would be blocked, in order to minimize business process disruptions for that specific user.

Some embodiments form 734 disruption tuples 468 by using risk score 474 models 438. A first model, also referred to as a high-risk model, identifies high-risk user accounts to disable; disabling an account is a hard disruption. A second model or models, also referred to as a medium-risk model or models, identifies medium risk user accounts plus actions' respective likelihood 314 predictions assuming an attacker plus actions' respective likelihood predictions 316 assuming a valid non-attacker user, for high-resolution adaptive hardening 204. Some embodiments remove the limitation 214 on the permission(s) after the risk goes back down. These models estimate probabilities, given the signal history of the user/session, of which actions will provide a strong indication that the user is an attacker, so the embodiment can dynamically remove permissions accordingly.

As an example, in some embodiments and scenarios, a risk score is produced by a user/session risk score model. When the risk score is greater than a high threshold (e.g., 0.9), the embodiment disables the user account or user session, or both. When the risk score is between the high threshold and a low threshold (e.g., 0.2), the embodiment executes the action likelihood models, which produce a list of action(s) 308 to disrupt 214 or a configuration change from a first configuration to a second configuration, or do both. When the risk score is less than the low threshold, the embodiment restores the first configuration. This continues in a loop, as the system repeatedly updates the risk score.

In some embodiments, trained machine learning models 438 predict 406 the likelihood 314 of an action 132 being driven by an attacker, or the likelihood 316 of an action 132 being driven by a non-attacker (e.g., in connection with a false alert). These likelihoods 314 and 316 are compared 736 for a given action 132 to check whether they are sufficiently different (e.g., per an absolute amount 454 or a multiplication factor 318) to establish 504 that the action is deemed to be attacker-driven.

In some embodiments, the models 438 include one or more of: a long short-term memory (LSTM) model, a sequence model, or a multilayer model that predicts likelihoods of multiple actions 132.

Note that an embodiment enhances security even when some actions 132 do not have respective calculated likelihoods 328, because adding a new disruption tuple 468 incrementally improves security.

In another example, AFGAD functionality disrupts an attack represented by the following disruption tuple: << authentication with compromised credential(s) :: creation of new user(s) >>. Even though the alert in the precursor authentication arguably provides sufficient confidence to disable the user account, in order to avoid business process disruption, in some tools disabling the users is limited to a small number of users, e.g., five users. As a result, the attackers can often recover from the attack disruption, when they have global admin permissions, by creating new users. Instead of fully disabling the user, a soft disruption procedure under AFGAD 204 changes the role of the user from 'Global Admin' to 'Admin Reader', thus removing their permission to create new users, and gaining time for security personnel to respond without interrupting legitimate activity.

To help formulate 734 disruption tuples, some embodiments run a retrospective analysis 732 identifying a non-empty set of downstream actions 308 that distinguish attackers from valid users with high confidence, and generate a non-empty set of such actions that can be blocked for each precursor 212 non-empty set of signal(s) or alert(s). Then the embodiment analyzes the available roles 420 and determines how each role could be reduced to a lower-permission role in case the precursor signal 212 occurred. To help ensure minimal disruption for the user when the activity is legitimate, some embodiments go beyond the general statistics by also checking a historic behavior of the user, to verify that reducing the permissions does not interrupt normal (non-attacker) work.

In another example, AFGAD functionality 204 disrupts an attack represented by the following disruption tuple: << suspicious events from a business email compromise (BEC) detector where incrimination happens after email is sent :: one or more emails is sent >>. A challenge with some BEC detectors is that they are triggered only upon or after transmission of malicious email(s). A trigger in one financial fraud case was a single fraud email, while a trigger in a credential harvesting case was a campaign of multiple emails. In some cases, the disruption tuple description is further refined in response to an observation is that attackers most often used Outlook^{®} Web Access (OWA) (sometimes called Outlook^{®} on the Web) or PowerShell^{®} tools to perform malicious email compromise activities (marks of Microsoft Corporation). The disruption tuple precursor includes a sequence 402 of events that precede sending email(s), and the disruption tuple incrimination actions include Microsoft Exchange^{®} Online activities which are from the same IP address as the precursor sequence and which use OWA or PowerShell capabilities. To accomplish blocking 214, some embodiments utilize an Exchange^{®} Online Client Access Policy created in a customer's cloud tenant, which will block access using OWA protocol from suspicious IP address(es). As an additional safeguard, some embodiments include a precursor state 124 representing recent use of OWA or PowerShell tools.

In another example, AFGAD functionality 204 disrupts an attack represented by the following disruption tuple: << preceding step(s) of hard disruption chain prior to the final step(s) :: final step(s) of hard disruption chain >>. Some embodiments use a what-if approach to remove permissions and prevent the final step(s) at an earlier point in an attack than the point where hard disruption would occur.

One such chain includes a risky user XDR alert, and a guest invitation XDR alert in the precursor 212. At this point, the following permissions are blocked to prevent execution of incrimination actions: high privilege role assignment on the guest user (e.g., Owner or Admin), and subscription transfer (disable user in case the subscription transfer alert is on a risky user). In the notation used above, this example is consistent with a disruption tuple << risky user XDR alert, guest invitation XDR alert :: high privilege role assignment on guest user, subscription transfer >>.

Another such chain includes a risky user detection, an access elevation, and a resource quota increase in at least two locations. At this point, the following incrimination actions are blocked 214: mass compute (e.g., virtual machine, worker process) creation, cryptocurrency runs. In the notation used above, this example is consistent with a disruption tuple << risky user detection, access elevation, resource quota increases :: virtual machine creation OR worker process creation OR cryptocurrency run >>.

### Internet of Things

In some embodiments, the system 202 is, or includes, an embedded system such as an Internet of Things system. "loT" or "Internet of Things" means any networked collection of addressable embedded computing or data generation or actuator nodes. An individual node is referred to as an internet of things device 101 or loT device 101 or internet of things system 102 or loT system 102. Such nodes are examples of computer systems 102 as defined herein, and may include or be referred to as a "smart" device, "endpoint", "chip", "label", or "tag", for example, and loT may be referred to as a "cyber-physical system". In the phrase "embedded system" the embedding referred to is the embedding a processor and memory in a device, not the embedding of debug script in source code.

loT nodes and systems typically have at least two of the following characteristics: (a) no local human-readable display; (b) no local keyboard; (c) a primary source of input is sensors that track sources of non-linguistic data to be uploaded from the loT device; (d) no local rotational disk storage - RAM chips or ROM chips provide the only local memory; (e) no CD or DVD drive; (f) being embedded in a household appliance or household fixture; (g) being embedded in an implanted or wearable medical device; (h) being embedded in a vehicle; (i) being embedded in a process automation control system; or (j) a design focused on one of the following: environmental monitoring, civic infrastructure monitoring, agriculture, industrial equipment monitoring, energy usage monitoring, human or animal health or fitness monitoring, physical security, physical transportation system monitoring, object tracking, inventory control, supply chain control, fleet management, or manufacturing. IoT communications may use protocols such as TCP/IP, Constrained Application Protocol (CoAP), Message Queuing Telemetry Transport (MQTT), Advanced Message Queuing Protocol (AMQP), HTTP, HTTPS, Transport Layer Security (TLS), UDP, or Simple Object Access Protocol (SOAP), for example, for wired or wireless (cellular or otherwise) communication. IoT storage or actuators or data output or control may be a target of unauthorized access, either via a cloud, via another network, or via direct local access attempts.

### Technical Character

The technical character of embodiments described herein will be apparent to one of ordinary skill in the art, and will also be apparent in several ways to a wide range of attentive readers. Some embodiments address technical activities such as blocking 214 permission 404 for execution of an action 132 in a computing system by a user account 130 or user session 130, detecting 310 an attempt 216 by a user account or user session 130 to execute an action 132 in a computing system, computationally analyzing 732 data for form 734 disruption tuple data structures 468, or executing a machine learning model 438, which are each an activity deeply rooted in computing technology. Some of the technical mechanisms discussed include, e.g., machine learning models 438, statistical models 438, disruption tuple data structures 468, association mechanisms 324, interfaces 326, and AFGAD software 302. Some of the technical effects discussed include, e.g., automated disruption of attack activity without disruption of legitimate activity, and automated disruption of attack activity which is not covered by alerts defined in a system. Thus, purely mental processes and activities limited to pen-and-paper are clearly excluded from the scope of any embodiment. Other advantages based on the technical characteristics of the teachings will also be apparent to one of skill from the description provided.

One of skill understands that automated disruption of attack activity in a computing network 108 or other computing system 102 is technical activity which cannot be performed mentally at all, and cannot be performed manually with the speed and accuracy required in computing systems. This is especially true of computing systems which communicate electronically with the internet 412 and therefore have a large attack surface. Hence, automated disruption technology improvements such as the various examples of AFGAD functionality 204 described herein are improvements to computing technology. One of skill understands that attempting to manually detect and disrupt an attack would create unacceptable delays in permissions blocking, pose severe risks of damage from attacks, and introduce unnecessary and unacceptable human errors. People manifestly lack the speed, accuracy, memory capacity, and specific processing capabilities required to perform automated attacker-focused granular attack disruption as taught herein.

Different embodiments provide different technical benefits or other advantages in different circumstances, but one of skill informed by the teachings herein will acknowledge that particular technical advantages will likely follow from particular embodiment features or feature combinations, as noted at various points herein. Any generic or abstract aspects are integrated into a practical application such as a SIEM tool or an extended detection and response (XDR) tool. One such tool is an enhanced Microsoft Defender^{™} XDR coordinated threat protection solution (mark of Microsoft Corporation), but practical applications of the teachings herein are not technologically limited to Microsoft products and services. Practical application opportunities also extend beyond XDR tools to endpoint detection and response (EDR) tools and managed detection and response (MDR) tools, among other tools.

Some embodiments described herein may be viewed by some people in a broader context. For instance, concepts such as efficiency, reliability, user satisfaction, or waste may be deemed relevant to a particular embodiment. However, it does not follow from the availability of a broad context that exclusive rights are being sought herein for abstract ideas; they are not.

Rather, the present disclosure is focused on providing appropriately specific embodiments whose technical effects fully or partially solve particular technical problems, such as how to rapidly detect that a cyberattack is underway, how to disrupt the cyberattack without disrupting legitimate activity in the system that is being attacked, and how to extend the system's scope of protection against cyberattacks, e.g., to include protection beyond attacks that are described only in terms of alerts. Other configured storage media, systems, and processes involving efficiency, reliability, user satisfaction, or waste are outside the present scope. Accordingly, vagueness, mere abstractness, lack of technical character, and accompanying proof problems are also avoided under a proper understanding of the present disclosure.

### Additional Combinations and Variations

Any of these combinations of software code, data structures, logic, components, communications, and/or their functional equivalents may also be combined with any of the systems and their variations described above. A process may include any steps described herein in any subset or combination or sequence which is operable. Each variant may occur alone, or in combination with any one or more of the other variants. Each variant may occur with any of the processes and each process may be combined with any one or more of the other processes. Each process or combination of processes, including variants, may be combined with any of the configured storage medium combinations and variants described above.

More generally, one of skill will recognize that not every part of this disclosure, or any particular details therein, are necessarily required to satisfy legal criteria such as enablement, written description, or best mode. Also, embodiments are not limited to the particular scenarios, language models, prompts, motivating examples, operating environments, tools, peripherals, software process flows, identifiers, repositories, data structures, data selections, naming conventions, notations, control flows, or other implementation choices described herein. Any apparent conflict with any other patent disclosure, even from the owner of the present subject matter, has no role in interpreting the claims presented in this patent disclosure.

### Acronyms, abbreviations, names, and symbols

Some acronyms, abbreviations, names, and symbols are defined below. Others are defined elsewhere herein, or do not require definition here in order to be understood by one of skill.
ALU: arithmetic and logic unit
API: application program interface
BIOS: basic input/output system
CD: compact disc
CPU: central processing unit
DVD: digital versatile disk or digital video disc
FPGA: field-programmable gate array
FPU: floating point processing unit
GDPR: General Data Protection Regulation
GPU: graphical processing unit
GUI: graphical user interface
HTTPS: hypertext transfer protocol, secure
IaaS or IAAS: infrastructure-as-a-service
LAN: local area network
OS: operating system
PaaS or PAAS: platform-as-a-service
RAM: random access memory
ROM: read only memory
SIEM: security information and event management
TPU: tensor processing unit
UEFI: Unified Extensible Firmware Interface
UI: user interface
WAN: wide area network

### Some Additional Terminology

Reference is made herein to exemplary embodiments such as those illustrated in the drawings, and specific language is used herein to describe the same. But alterations and further modifications of the features illustrated herein, and additional technical applications of the abstract principles illustrated by particular embodiments herein, which would occur to one skilled in the relevant art(s) and having possession of this disclosure, should be considered within the scope of the claims.

The meaning of terms is clarified in this disclosure, so the claims should be read with careful attention to these clarifications. Specific examples are given, but those of skill in the relevant art(s) will understand that other examples may also fall within the meaning of the terms used, and within the scope of one or more claims. Terms do not necessarily have the same meaning here that they have in general usage (particularly in non-technical usage), or in the usage of a particular industry, or in a particular dictionary or set of dictionaries. Reference numerals may be used with various phrasings, to help show the breadth of a term. Sharing a reference numeral does not mean necessarily sharing every aspect, feature, or limitation of every item referred to using the reference numeral. Omission of a reference numeral from a given piece of text does not necessarily mean that the content of a Figure is not being discussed by the text. The present disclosure asserts and exercises the right to specific and chosen lexicography. Quoted terms are being defined explicitly, but a term may also be defined implicitly without using quotation marks. Terms may be defined, either explicitly or implicitly, here in the Detailed Description and/or elsewhere in the application file.

A "computer system" (a.k.a. "computing system") may include, for example, one or more servers, motherboards, processing nodes, laptops, tablets, personal computers (portable or not), personal digital assistants, smartphones, smartwatches, smart bands, cell or mobile phones, other mobile devices having at least a processor and a memory, video game systems, augmented reality systems, holographic projection systems, televisions, wearable computing systems, and/or other device(s) providing one or more processors controlled at least in part by instructions. The instructions may be in the form of firmware or other software in memory and/or specialized circuitry.

A "multithreaded" computer system is a computer system which supports multiple execution threads. The term "thread" should be understood to include code capable of or subject to scheduling, and possibly to synchronization. A thread may also be known outside this disclosure by another name, such as "task," "process," or "coroutine," for example. However, a distinction is made herein between threads and processes, in that a thread defines an execution path inside a process. Also, threads of a process share a given address space, whereas different processes have different respective address spaces. The threads of a process may run in parallel, in sequence, or in a combination of parallel execution and sequential execution (e.g., time-sliced).

A "processor" is a thread-processing unit, such as a core in a simultaneous multithreading implementation. A processor includes hardware. A given chip may hold one or more processors. Processors may be general purpose, or they may be tailored for specific uses such as vector processing, graphics processing, signal processing, floating-point arithmetic processing, encryption, I/O processing, machine learning, and so on.

"Kernels" include operating systems, hypervisors, virtual machines, BIOS or UEFI code, and similar hardware interface software.

"Code" means processor instructions, data (which includes constants, variables, and data structures), or both instructions and data. "Code" and "software" are used interchangeably herein. Executable code, interpreted code, and firmware are some examples of code.

"Program" is used broadly herein, to include applications, kernels, drivers, interrupt handlers, firmware, state machines, libraries, and other code written by programmers (who are also referred to as developers) and/or automatically generated.

A "routine" is a callable piece of code which normally returns control to an instruction just after the point in a program execution at which the routine was called. Depending on the terminology used, a distinction is sometimes made elsewhere between a "function" and a "procedure": a function normally returns a value, while a procedure does not. As used herein, "routine" includes both functions and procedures. A routine may have code that returns a value (e.g., sin(x)) or it may simply return without also providing a value (e.g., void functions).

"Service" as a noun means a consumable program offering, in a cloud computing environment or other network or computing system environment, which provides resources to multiple programs or provides resource access to multiple programs, or does both. A service implementation may itself include multiple applications or other programs.

"Cloud" means pooled resources for computing, storage, and networking which are elastically available for measured on-demand service. A cloud may be private, public, community, or a hybrid, and cloud services may be offered in the form of infrastructure as a service (laaS), platform as a service (PaaS), software as a service (SaaS), or another service. Unless stated otherwise, any discussion of reading from a file or writing to a file includes reading/writing a local file or reading/writing over a network, which may be a cloud network or other network, or doing both (local and networked read/write). A cloud may also be referred to as a "cloud environment" or a "cloud computing environment".

"Access" to a computational resource includes use of a permission or other capability to read, modify, write, execute, move, delete, create, or otherwise utilize the resource. Attempted access may be explicitly distinguished from actual access, but "access" without the "attempted" qualifier includes both attempted access and access actually performed or provided.

Herein, activity by a user refers to activity by a user device or activity by a user account or user session, or by software on behalf of a user, or by hardware on behalf of a user. Activity is represented by digital data or machine operations or both in a computing system. Activity within the scope of any claim based on the present disclosure excludes human actions per se. Software or hardware activity "on behalf of a user" accordingly refers to software or hardware activity on behalf of a user device or on behalf of a user account or a user session or on behalf of another computational mechanism or computational artifact, and thus does not bring human behavior per se within the scope of any embodiment or any claim.

"Digital data" means data in a computing system, as opposed to data written on paper or thoughts in a person's mind, for example. Similarly, "digital memory" refers to a non-living device, e.g., computing storage hardware, not to human or other biological memory.

As used herein, "include" allows additional elements (i.e., includes means comprises) unless otherwise stated.

"Optimize" means to improve, not necessarily to perfect. For example, it may be possible to make further improvements in a program or an algorithm which has been optimized.

"Process" is sometimes used herein as a term of the computing science arts, and in that technical sense encompasses computational resource users, which may also include or be referred to as coroutines, threads, tasks, interrupt handlers, application processes, kernel processes, procedures, or object methods, for example. As a practical matter, a "process" is the computational entity identified by system utilities such as Windows^{®} Task Manager, Linux^{®} ps, or similar utilities in other operating system environments (marks of Microsoft Corporation, Linus Torvalds, respectively). "Process" may also be used as a patent law term of art, e.g., in describing a process claim as opposed to a system claim or an article of manufacture (configured storage medium) claim. Similarly, "method" is used herein primarily as a technical term in the computing science arts (a kind of "routine") but it is also a patent law term of art (akin to a "method"). "Process" and "method" in the patent law sense are used interchangeably herein. Those of skill will understand which meaning is intended in a particular instance, and will also understand that a given claimed process or method (in the patent law sense) may sometimes be implemented using one or more processes or methods (in the computing science sense).

"Automatically" means by use of automation (e.g., general purpose computing hardware configured by software for specific operations and technical effects discussed herein), as opposed to without automation. In particular, steps performed "automatically" are not performed by hand on paper or in a person's mind, although they may be initiated by a human person or guided interactively by a human person. Automatic steps are performed with a machine in order to obtain one or more technical effects that would not be realized without the technical interactions thus provided. Steps performed automatically are presumed to include at least one operation performed proactively.

One of skill understands that technical effects are the presumptive purpose of a technical embodiment. The mere fact that calculation is involved in an embodiment, for example, and that some calculations can also be performed without technical components (e.g., by paper and pencil, or even as mental steps) does not remove the presence of the technical effects or alter the concrete and technical nature of the embodiment, particularly in real-world embodiment implementations. Automated disruption operations such as observing 304 precursor satisfaction, discerning 502 that an incrimination action has not yet been executed after the precursor is satisfied, establishing 504 that an incrimination action is sufficiently attacker-focused and hence sufficiently unlikely to be part of legitimate activity, blocking 214 actions, detecting 310 an attempt to perform an action, and many other operations discussed herein (whether recited in the Figures or not), are understood to be inherently digital and computational. A human mind cannot interface directly with a CPU or other processor, or with RAM or other digital storage, to read and write the necessary data to perform the AFGAD steps 700 taught herein even in a hypothetical situation or a prototype situation, much less in an embodiment's real world large computing environment, e.g., an internet-connected environment. This would all be well understood by persons of skill in the art in view of the present disclosure. Moreover, one of skill understands that AFGAD functionality cannot be implemented using merely with conventional tools and steps, because actual implementation requires the use of teachings which were first provided in the present disclosure.

"Computationally" likewise means a computing device (processor plus memory, at least) is being used, and excludes obtaining a result by mere human thought or mere human action alone. For example, doing arithmetic with a paper and pencil is not doing arithmetic computationally as understood herein. Computational results are faster, broader, deeper, more accurate, more consistent, more comprehensive, and/or otherwise provide technical effects that are beyond the scope of human performance alone. "Computational steps" are steps performed computationally. Neither "automatically" nor "computationally" necessarily means "immediately". "Computationally" and "automatically" are used interchangeably herein.

"Proactively" means without a direct request from a user, and indicates machine activity rather than human activity. Indeed, a user may not even realize that a proactive step by an embodiment was possible until a result of the step has been presented to the user. Except as otherwise stated, any computational and/or automatic step described herein may also be done proactively.

"Based on" means based on at least, not based exclusively on. Thus, a calculation based on X depends on at least X, and may also depend on Y.

Throughout this document, use of the optional plural "(s)", "(es)", or "(ies)" means that one or more of the indicated features is present. For example, "processor(s)" means "one or more processors" or equivalently "at least one processor".

"At least one" of a list of items means one of the items, or two of the items, or three of the items, and so on up to and including all N of the items, where the list is a list of N items. The presence of an item in the list does not require the presence of the item (or a check for the item) in an embodiment. For instance, if an embodiment of a system is described herein as including at least one of A, B, C, or D, then a system that includes A but does not check for B or C or D is an embodiment, and so is a system that includes A and also includes B but does not include or check for C or D. Similar understandings pertain to items which are steps or step portions or options in a method embodiment. This is not a complete list of all possibilities; it is provided merely to aid understanding of the scope of "at least one" that is intended herein.

For the purposes of United States law and practice, use of the word "step" herein, in the claims or elsewhere, is not intended to invoke means-plus-function, step-plus-function, or 35 United State Code Section 112 Sixth Paragraph / Section 112(f) claim interpretation. Any presumption to that effect is hereby explicitly rebutted.

For the purposes of United States law and practice, the claims are not intended to invoke means-plus-function interpretation unless they use the phrase "means for". Claim language intended to be interpreted as means-plus-function language, if any, will expressly recite that intention by using the phrase "means for". When means-plus-function interpretation applies, whether by use of "means for" and/or by a court's legal construction of claim language, the means recited in the specification for a given noun or a given verb should be understood to be linked to the claim language and linked together herein by virtue of any of the following: appearance within the same block in a block diagram of the figures, denotation by the same or a similar name, denotation by the same reference numeral, a functional relationship depicted in any of the figures, a functional relationship noted in the present disclosure's text. For example, if a claim limitation recited a "zac widget" and that claim limitation became subject to means-plus-function interpretation, then at a minimum all structures identified anywhere in the specification in any figure block, paragraph, or example mentioning "zac widget", or tied together by any reference numeral assigned to a zac widget, or disclosed as having a functional relationship with the structure or operation of a zac widget, would be deemed part of the structures identified in the application for zac widgets and would help define the set of equivalents for zac widget structures.

One of skill will recognize that this disclosure discusses various data values and data structures, and recognize that such items reside in a memory (RAM, disk, etc.), thereby configuring the memory. One of skill will also recognize that this disclosure discusses various algorithmic steps which are to be embodied in executable code in a given implementation, and that such code also resides in memory, and that it effectively configures any general-purpose processor which executes it, thereby transforming it from a general-purpose processor to a special-purpose processor which is functionally special-purpose hardware.

Accordingly, one of skill would not make the mistake of treating as nonoverlapping items (a) a memory recited in a claim, and (b) a data structure or data value or code recited in the claim. Data structures and data values and code are understood to reside in memory, even when a claim does not explicitly recite that residency for each and every data structure or data value or piece of code mentioned. Accordingly, explicit recitals of such residency are not required. However, they are also not prohibited, and one or two select recitals may be present for emphasis, without thereby excluding all the other data values and data structures and code from residency. Likewise, code functionality recited in a claim is understood to configure a processor, regardless of whether that configuring quality is explicitly recited in the claim.

Throughout this document, unless expressly stated otherwise any reference to a step in a process presumes that the step may be performed directly by a party of interest and/or performed indirectly by the party through intervening mechanisms and/or intervening entities, and still lie within the scope of the step. That is, direct performance of the step by the party of interest is not required unless direct performance is an expressly stated requirement. For example, a computational step on behalf of a party of interest, such as adding, analyzing, ascertaining, associating, attempting, blocking, categorizing, changing, comparing, confirming, connecting, creating, designating, detecting, discerning, disrupting, establishing, executing, filtering, getting, observing, performing, preventing, prohibiting, raising, requesting, restricting, running, transmitting, verifying (and adds, added, analyzes, analyzed, etc.) with regard to a destination or other subject may involve intervening action, such as the foregoing or such as forwarding, copying, uploading, downloading, encoding, decoding, compressing, decompressing, encrypting, decrypting, authenticating, invoking, and so on by some other party or mechanism, including any action recited in this document, yet still be understood as being performed directly by or on behalf of the party of interest. Example verbs listed here may overlap in meaning or even be synonyms; separate verb names do not dictate separate functionality in every case.

Whenever reference is made to data or instructions, it is understood that these items configure a computer-readable memory and/or computer-readable storage medium, thereby transforming it to a particular article, as opposed to simply existing on paper, in a person's mind, or as a mere signal being propagated on a wire, for example. For the purposes of patent protection in the United States, a memory or other storage device or other computer-readable storage medium is not a propagating signal or a carrier wave or mere energy outside the scope of patentable subject matter under United States Patent and Trademark Office (USPTO) interpretation of the In re Nuijten case. No claim covers a signal per se or mere energy in the United States, and any claim interpretation that asserts otherwise in view of the present disclosure is unreasonable on its face. Unless expressly stated otherwise in a claim granted outside the United States, a claim does not cover a signal per se or mere energy.

Moreover, notwithstanding anything apparently to the contrary elsewhere herein, a clear distinction is to be understood between (a) computer readable storage media and computer readable memory, on the one hand, and (b) transmission media, also referred to as signal media, on the other hand. A transmission medium is a propagating signal or a carrier wave computer readable medium. By contrast, computer readable storage media and computer readable memory and computer readable storage devices are not propagating signal or carrier wave computer readable media. Unless expressly stated otherwise in the claim, "computer readable medium" means a computer readable storage medium, not a propagating signal per se and not mere energy.

An "embodiment" herein is an example. The term "embodiment" is not interchangeable with "the invention". Embodiments may freely share or borrow aspects to create other embodiments (provided the result is operable), even if a resulting combination of aspects is not explicitly described per se herein. Requiring each and every permitted combination to be explicitly and individually described is unnecessary for one of skill in the art, and would be contrary to policies which recognize that patent specifications are written for readers who are skilled in the art. Formal combinatorial calculations and informal common intuition regarding the number of possible combinations arising from even a small number of combinable features will also indicate that a large number of aspect combinations exist for the aspects described herein. Accordingly, requiring an explicit recitation of each and every combination would be contrary to policies calling for patent specifications to be concise and for readers to be knowledgeable in the technical fields concerned.

### Remarks Regarding Reference Numerals

Reference numerals are provided for convenience and in support of the drawing figures and as part of the text of the specification, which collectively describe aspects of embodiments by reference to multiple items. Items which do not have a unique reference numeral may nonetheless be part of a given embodiment. For better legibility of the text, a given reference numeral is recited near some, but not all, recitations of the referenced item in the text. The same reference numeral may be used with reference to different examples or different instances of a given item.

The following remarks pertain to particular reference numerals:
100 operating environment, also referred to as computing environment; includes one or more systems 102
101 machine in a system 102, e.g., any device having at least a processor 110 and having a distinct identifier such as an IP address or a MAC (media access control) address; may be a physical machine or be a virtual machine implemented on physical hardware
102 computer system, also referred to as a "computational system" or "computing system", and when in a network may be referred to as a "node"
104 users, e.g., user of an enhanced system 202
106 peripheral device
108 network generally, including, e.g., LANs, WANs, software-defined networks, clouds, and other wired or wireless networks
110 processor or non-empty set of processors; includes hardware
112 computer-readable storage medium, e.g., RAM, hard disks; also referred to as storage device
114 removable configured computer-readable storage medium
116 instructions executable with processor; may be on removable storage media or in other memory (volatile or nonvolatile or both)
118 digital data in a system 102; data structures, values, source code, and other examples are discussed herein
120 kernel(s), e.g., operating system(s), BIOS, UEFI, device drivers; also refers to an execution engine such as a language runtime
122 software tools, software applications, security controls; hardware tools; computational
124 system state, as represented within a computing system; also referred to as a condition; digital
126 display screens, also referred to as "displays"
128 computing hardware not otherwise associated with a reference numeral 106, 108, 110, 112, 114
130 user account or user session, as represented within a computing system
132 computational action, as represented or effectuated in a computing system
136 cloud, also referred to as cloud environment or cloud computing environment
202 enhanced computing system, i.e., system 102 enhanced with functionality 204 as taught herein
204 attacker-focused granular action disruption functionality (also referred to as AFGAD functionality 204, AFGAD what-if functionality 204, high-resolution adaptive hardening 204, or functionality 204), e.g., software or specialized hardware which performs or is configured to perform steps 304, 504, and 214, or steps 304, 214, and 602, or steps 504 and 214, or steps 214, 310, and 312, or any software or hardware which performs or is configured to perform an attacker-focused automatic disruption activity first disclosed herein, or to perform a novel method 700 first disclosed herein
500 flowchart; 500 also refers to AFGAD methods that are illustrated by or consistent with the Figure 5 flowchart or any variation of the Figure 5 flowchart described herein; all AFGAD method steps are computational, not human activity
600 flowchart; 600 also refers to AFGAD methods that are illustrated by or consistent with the Figure 6 flowchart or any variation of the Figure 6 flowchart described herein; all AFGAD method steps are computational, not human activity
700 flowchart; 700 also refers to AFGAD methods that are illustrated by or consistent with the Figure 7 flowchart, which incorporates the Figure 6 flowchart, the Figure 5 flowchart, and all other steps taught herein, or methods that are illustrated by or consistent with any variation of the Figure 7 flowchart described herein; all AFGAD method steps are computational, not human activity
740 any step or item discussed in the present disclosure that has not been assigned some other reference numeral; 740 may thus be shown expressly as a reference numeral for various steps or items or both, and may be added as a reference numeral (in the current disclosure or any subsequent patent application which claims priority to the current disclosure) for various steps or items or both without thereby adding new matter

### Conclusion

Some embodiments provide attacker-focused granular disruption functionality 204 to detect and defend a system 202 against cyberattacks. An embodiment observes 304 that a user account or session 130 has executed one or more precursor actions 402 but has not executed an incrimination action 308. The incrimination action is more likely, by at least a specified amount 454 or 318, to be performed by an attacker-driven 322 account or session than by a non-attacker-driven 322 account or session. Performance of the incrimination action is preemptively blocked 214, without disabling the account or session. The block is focused in many cases on only the incrimination action; in some scenarios the embodiment also blocks 214 performance of similar actions 132. After an attempt 216 by the account or session to perform the blocked incrimination action, larger blocks 218 on activity are enforced, up to and including disablement 460, because the attempt 216 indicates strongly that the account or session 130 is being driven by an attacker 138.

Embodiments are understood to also themselves include or benefit from tested and appropriate security controls and privacy controls such as the General Data Protection Regulation (GDPR). Use of the tools and techniques taught herein can be used together with such controls.

Although Microsoft technology is used in some motivating examples, the teachings herein are not limited to use in technology supplied or administered by Microsoft. Under a suitable license, for example, the present teachings could be embodied in software or services provided by other cloud service providers.

Although particular embodiments are expressly illustrated and described herein as processes, as configured storage media, or as systems, it will be appreciated that discussion of one type of embodiment also generally extends to other embodiment types. For instance, the descriptions of processes in connection with the Figures also help describe configured storage media, and help describe the technical effects and operation of systems and manufactures like those discussed in connection with other Figures. It does not follow that any limitations from one embodiment are necessarily read into another. In particular, processes are not necessarily limited to the data structures and arrangements presented while discussing systems or manufactures such as configured memories.

Those of skill will understand that implementation details may pertain to specific code, such as specific thresholds, comparisons, specific kinds of platforms or programming languages or architectures, specific scripts or other tasks, and specific computing environments, and thus need not appear in every embodiment. Those of skill will also understand that program identifiers and some other terminology used in discussing details are implementation-specific and thus need not pertain to every embodiment. Nonetheless, although they are not necessarily required to be present here, such details may help some readers by providing context and/or may illustrate a few of the many possible implementations of the technology discussed herein.

With due attention to the items provided herein, including technical processes, technical effects, technical mechanisms, and technical details which are illustrative but not comprehensive of all claimed or claimable embodiments, one of skill will understand that the present disclosure and the embodiments described herein are not directed to subject matter outside the technical arts, or to any idea of itself such as a principal or original cause or motive, or to a mere result per se, or to a mental process or mental steps, or to a business method or prevalent economic practice, or to a mere method of organizing human activities, or to a law of nature per se, or to a naturally occurring thing or process, or to a living thing or part of a living thing, or to a mathematical formula per se, or to isolated software per se, or to a merely conventional computer, or to anything wholly imperceptible or any abstract idea per se, or to insignificant post-solution activities, or to any method implemented entirely on an unspecified apparatus, or to any method that fails to produce results that are useful and concrete, or to any preemption of all fields of usage, or to any other subject matter which is ineligible for patent protection under the laws of the jurisdiction in which such protection is sought or is being licensed or enforced.

Reference herein to an embodiment having some feature X and reference elsewhere herein to an embodiment having some feature Y does not exclude from this disclosure embodiments which have both feature X and feature Y, unless such exclusion is expressly stated herein. All possible negative claim limitations are within the scope of this disclosure, in the sense that any feature which is stated to be part of an embodiment may also be expressly removed from inclusion in another embodiment, even if that specific exclusion is not given in any example herein. The term "embodiment" is merely used herein as a more convenient form of "process, system, article of manufacture, configured computer readable storage medium, and/or other example of the teachings herein as applied in a manner consistent with applicable law." Accordingly, a given "embodiment" may include any combination of features disclosed herein, provided the embodiment is consistent with at least one claim.

Not every item shown in the Figures need be present in every embodiment. Conversely, an embodiment may contain item(s) not shown expressly in the Figures. Although some possibilities are illustrated here in text and drawings by specific examples, embodiments may depart from these examples. For instance, specific technical effects or technical features of an example may be omitted, renamed, grouped differently, repeated, instantiated in hardware and/or software differently, or be a mix of effects or features appearing in two or more of the examples. Functionality shown at one location may also be provided at a different location in some embodiments; one of skill recognizes that functionality modules can be defined in various ways in a given implementation without necessarily omitting desired technical effects from the collection of interacting modules viewed as a whole. Distinct steps may be shown together in a single box in the Figures, due to space limitations or for convenience, but nonetheless be separately performable, e.g., one may be performed without the other in a given performance of a method.

Reference has been made to the figures throughout by reference numerals. Any apparent inconsistencies in the phrasing associated with a given reference numeral, in the figures or in the text, should be understood as simply broadening the scope of what is referenced by that numeral. Different instances of a given reference numeral may refer to different embodiments, even though the same reference numeral is used. Similarly, a given reference numeral may be used to refer to a verb, a noun, and/or to corresponding instances of each, e.g., a processor 110 may process 110 instructions by executing them.

As used herein, terms such as "a", "an", and "the" are inclusive of one or more of the indicated item or step. In particular, in the claims a reference to an item generally means at least one such item is present and a reference to a step means at least one instance of the step is performed. Similarly, "is" and other singular verb forms should be understood to encompass the possibility of "are" and other plural forms, when context permits, to avoid grammatical errors or misunderstandings.

Headings are for convenience only; information on a given topic may be found outside the section whose heading indicates that topic.

All claims and the abstract, as filed, are part of the specification. The abstract is provided for convenience and for compliance with patent office requirements; it is not a substitute for the claims and does not govern claim interpretation in the event of any apparent conflict with other parts of the specification. Similarly, the summary is provided for convenience and does not govern in the event of any conflict with the claims or with other parts of the specification. Claim interpretation shall be made in view of the specification as understood by one of skill in the art; it is not required to recite every nuance within the claims themselves as though no other disclosure was provided herein.

To the extent any term used herein implicates or otherwise refers to an industry standard, and to the extent that applicable law requires identification of a particular version of such as standard, this disclosure shall be understood to refer to the most recent version of that standard which has been published in at least draft form (final form takes precedence if more recent) as of the earliest priority date of the present disclosure under applicable patent law.

While exemplary embodiments have been shown in the drawings and described above, it will be apparent to those of ordinary skill in the art that numerous modifications can be made without departing from the principles and concepts set forth in the claims, and that such modifications need not encompass an entire abstract concept. Although the subject matter is described in language specific to structural features and/or procedural acts, it is to be understood that the subject matter defined in the appended claims is not necessarily limited to the specific technical features or acts described above the claims. It is not necessary for every means or aspect or technical effect identified in a given definition or example to be present or to be utilized in every embodiment. Rather, the specific features and acts and effects described are disclosed as examples for consideration when implementing the claims.

All changes which fall short of enveloping an entire abstract idea but come within the meaning and range of equivalency of the claims are to be embraced within their scope to the full extent permitted by law.

## Claims

1. A method of attacker-focused granular action disruption in a computing system (102), the method comprising automatically:
observing data representing a performance, in the computing system (102) by a user account or a user session (130), of at least one precursor event (212);
discerning that the at least one precursor event (212) is associated in the computing system (102) with an incrimination action which has not yet been performed by the user account or the user session (130) after the performance of the at least one precursor event (212);
establishing that, after the performance of the at least one precursor event (212), the incrimination action (308) is more likely to be performed by an attacker-driven account or an attacker-driven user session (322) than by a non-attacker-driven account or a non-attacker-driven user session; and
blocking the user account or the user session (130) from performing the incrimination action in the computing system (102), while maintaining in the computing system (102) a permission (404) for the user account or the user session to attempt execution (406) of the incrimination action (308) by blocking actual execution of the incrimination action, and maintaining in the computing system (102) a permission (404) for the user account or the user session (130) to execute an additional action other than the incrimination action (308) and other than any part of the precursor (212).

2. The method of claim 1, further comprising:
detecting an attempt by the user account or the user session to perform the blocked incrimination action; and
in response to detecting the attempt, restricting a capability of the user account or the user session in addition to the blocking the user account or the user session from performing the incrimination action.

3. The method of claim 1 or claim 2, wherein the establishing comprises confirming that an attacker likelihood of the incrimination action is N times a non-attacker likelihood of the incrimination action, where N is at least five, the attacker likelihood is computed from a likelihood of the incrimination action being performed by an attacker-driven account or an attacker-driven session, and the non-attacker likelihood is computed from a likelihood of the incrimination action being performed by at least one account or at least one session that is not categorized as an attacker-driven account or an attacker-driven session.

4. The method of any of claims 1 to 3, wherein blocking the user account or the user session from performing the incrimination action comprises at least one of:
blocking an action which is configured to upon execution add an additional user account to the computing system (102);
blocking an action which is configured to upon execution run a specified process;
blocking an action which is configured to upon execution change a resource configuration in the computing system (102);
blocking an action which is configured to upon execution create a resource in a cloud computing environment;
blocking an action which is configured to upon execution request an internet connection; or
blocking an action which is configured to upon execution transmit data over an internet connection;
wherein blocking the user account or the user session from performing the incrimination action optionally further comprises at least one of:
changing an association in the computing system between a role and the user account;
prohibiting changing an association in the computing system (102) between a role and a different user account than the user account;
preventing creation of a virtual machine;
prohibiting email activity from a specified IP address;
prohibiting email activity from a specified shell; or
prohibiting email activity from a specified web app.

5. The method of any of claims 1 to 4, comprising at least one of:
the blocking is completed before any security alert is automatically raised in response to the performance of the at least one precursor event; or
the blocking is completed before any security alert which is automatically raised in response to the performance of the at least one precursor event has been designated a part of an incident;
wherein, optionally, no alert is raised in the computing system (102) in response to the performance of the at least one precursor event.

6. The method of any of claims 1 to 5, further comprising:
ascertaining that a precursor state is also associated in the computing system with the incrimination action; and
verifying that the precursor state is present in the computing system (102) before blocking the user account or the user session from performing the incrimination action in the computing system.

7. A computing system (102), comprising:
at least one digital memory (112);
a first description (464) residing in and configuring the at least one digital memory (112), the first description (464) representing a precursor sequence (402) of one or more precursor events (212, 132);
a second description (442) residing in and configuring the at least one digital memory (112), the second description (442) comprising second data (118) representing an incrimination action which is distinct from the precursor sequence (402);
at least one processor (110) in operable communication with the at least one digital memory (112), the at least one processor (110) configured to perform an attacker-focused granular action disruption method (700) which comprises (a) observing third data (118) which represents a performance (306) of the precursor sequence (402) by a user account or a user session (130), (b) discerning fourth data (118) which represents that the incrimination action (308) was not performed (306) by the user account or the user session (130) after the performance (306) of the precursor sequence (402) by the user account or the user session (130), or discerning a lack of fifth data (118) which represents that the incrimination action (308) has been performed by the user account or the user session after the performance of the precursor sequence by the user account or the user session (130), or both, (c) establishing (504) that, after the performance (306) of the precursor sequence (402), the incrimination action (308) is at least three times more likely to be performed by an attacker-driven account or an attacker-driven session than by a non-attacker-driven account or a non-attacker-driven session, and (d) blocking the user account or the user session from performing the incrimination action (308), while (e) maintaining a permission (404) for the user account or the user session to attempt execution of the incrimination action by blocking actual execution of the incrimination action, and (f) maintaining a permission for the user account or the user session to execute an additional action other than the incrimination action (308) and other than any part of the precursor sequence (402);
wherein the establishing optionally comprises getting a likelihood that the user account or the user session has performed the incrimination action prior to the performance of the precursor sequence by the user account or the user session.

8. The computing system of claim 7, wherein the at least one processor is also configured to form the first description and the second description at least in part by computationally analyzing at least one of:
a non-empty set of events and alerts;
a non-empty set of alerts; or
a non-empty event log.

9. The computing system of claim 7 or claim 8, wherein the at least one processor is also configured to form the first description and the second description at least in part by correlating, with a correlation model, candidate precursor events with a candidate incrimination action, wherein the correlation model optionally comprises at least one of: a statistical model, or a machine learning model.

10. The computing system of any of claims 7 to 9, wherein the at least one processor is also configured to form the first description and the second description at least in part by filtering out a candidate incrimination action after determining that the candidate incrimination action is more likely, by a threshold likelihood, to be performed by a non-attacker-driven user account or a non-attacker-driven user session than by an attacker-driven user account or an attacker-driven user session.

11. The computing system of any of claims 7 to 10, wherein the establishing comprises confirming that an attacker likelihood of the incrimination action is N times a non-attacker likelihood of the incrimination action, where N is at least fifteen, the attacker likelihood is computed from a likelihood of the incrimination action being performed by an attacker-driven account or an attacker-driven user session, and the non-attacker likelihood is computed from a likelihood of the incrimination action being performed by at least one account or at least one user session other than the user account or the user session that is not categorized as an attacker-driven account or an attacker-driven session.

12. A computer-readable storage device (112) configured with data and instructions which upon execution by a processor (110) perform a method of attacker-focused granular action disruption in a computing system (102), the method comprising automatically:
observing data (118) representing a performance, in the computing system (102) by a user account or a user session (130), of a precursor sequence (402) of one or more events (132);
discerning that the precursor (212) is associated, by an association mechanism (324) in the computing system (102), with an incrimination action (308) which has not yet been performed by the user account or the user session after the performance of the precursor sequence (402);
establishing that, after the performance of the precursor sequence (402), the incrimination action is at least four times as likely to be performed by an attacker-driven account or an attacker-driven session (322) as the incrimination action is to be performed by a non-attacker-driven account or a non-attacker-driven session (316); and
blocking the user account or the user session from performing the incrimination action (308) in the computing system (102), while maintaining in the computing system (102) a permission for the user account or the user session to attempt execution (406) of the incrimination action by blocking actual execution of the incrimination action, and maintaining in the computing system (102) a permission for the user account or the user session to execute an additional action other than the incrimination action (308) and other than any part of the precursor;
wherein the establishing optionally comprises establishing that after the performance of the precursor sequence (402), the incrimination action (308) is at least ten times as likely to be performed by an attacker-driven account or an attacker-driven session (322) as the incrimination action (308) was to be performed by the user account or the user session (130) prior to the performance of the precursor sequence (402) by the user account or the user session (130).

13. The computer-readable storage device of claim 12, wherein the method further comprises detecting an attempt by the user account or the user session to perform the blocked incrimination action, and in response to detecting the attempt, restricting a capability of the user account or the user session in addition to blocking the user account or the user session from performing the incrimination action, and wherein restricting the capability comprises at least one of:
disabling the user account or the user session;
adding an authentication requirement to the user account or the user session;
adding an authorization requirement to the user account or the user session; or
simulating to the user account or the user session a simulated performance of the blocked incrimination action and not actually performing the blocked incrimination action.

14. The computer-readable storage device of claim 12 or claim 13, wherein the method further comprises obtaining, at least in part by executing a machine learning model, at least one of:
a likelihood that the incrimination action is performed by an attacker-driven account or an attacker-driven session; or
a likelihood that the incrimination action is performed by an account or a session that is not categorized as an attacker-driven account or an attacker-driven session.

15. The computer-readable storage device of any claims 12 to 14, wherein the method further comprises:
detecting an attempt by the user account or the user session to perform the blocked incrimination action; and
in response to detecting the attempt, automatically and proactively categorizing the user account or the user session as an attacker-driven account or an attacker-driven session.

## Patentansprüche

1. Verfahren zur angreiferfokussierten granularen Aktionsunterbrechung in einem Rechensystem (102), wobei das Verfahren automatisch Folgendes umfasst:
Beobachten von Daten, die eine Durchführung, in dem Rechensystem (102) durch ein Benutzerkonto oder eine Benutzersitzung (130), mindestens eines Vorläuferereignisses (212) darstellen;
Erkennen, dass das mindestens eine Vorläuferereignis (212) in dem Rechensystem (102) mit einer Inkriminierungsaktion verknüpft ist, die nach der Durchführung des mindestens einen Vorläuferereignisses (212) noch nicht durch das Benutzerkonto oder die Benutzersitzung (130) durchgeführt wurde;
Feststellen, dass die Inkriminierungsaktion (308) nach der Durchführung des mindestens einen Vorläuferereignisses (212) wahrscheinlicher durch ein angreifergesteuertes Konto oder eine angreifergesteuerte Benutzersitzung (322) durchgeführt wird als durch ein nicht-angreifergesteuertes Konto oder eine nicht-angreifergesteuerte Benutzersitzung; und
Blockieren des Benutzerkontos oder der Benutzersitzung (130) hinsichtlich der Durchführung der Inkriminierungsaktion in dem Rechensystem (102), während in dem Rechensystem (102) eine Erlaubnis (404) für das Benutzerkonto oder die Benutzersitzung aufrechterhalten wird, um eine Ausführung (406) der Inkriminierungsaktion (308) zu versuchen, indem die tatsächliche Ausführung der Inkriminierungsaktion blockiert wird, und in dem Rechensystem (102) eine Erlaubnis (404) für das Benutzerkonto oder die Benutzersitzung (130) aufrechterhalten wird, eine zusätzliche Aktion auszuführen, die sich von der Inkriminierungsaktion (308) unterscheidet und sich von jedem Teil des Vorläufers (212) unterscheidet.

2. Verfahren nach Anspruch 1, ferner umfassend:
Erfassen eines Versuchs durch das Benutzerkonto oder die Benutzersitzung, die blockierte Inkriminierungsaktion durchzuführen; und
als Reaktion auf das Erfassen des Versuchs, Einschränken einer Fähigkeit des Benutzerkontos oder der Benutzersitzung zusätzlich zum Blockieren des Benutzerkontos oder der Benutzersitzung hinsichtlich der Durchführung der Inkriminierungsaktion.

3. Verfahren nach Anspruch 1 oder Anspruch 2, wobei das Feststellen das Bestätigen umfasst, dass eine Angreiferwahrscheinlichkeit der Inkriminierungsaktion das N-Fache einer Nicht-Angreiferwahrscheinlichkeit der Inkriminierungsaktion beträgt, wobei N mindestens fünf ist, wobei die Angreiferwahrscheinlichkeit aus einer Wahrscheinlichkeit berechnet wird, dass die Inkriminierungsaktion durch ein angreifergesteuertes Konto oder eine angreifergesteuerte Sitzung durchgeführt wird, und die Nicht-Angreiferwahrscheinlichkeit aus einer Wahrscheinlichkeit berechnet wird, dass die Inkriminierungsaktion durch mindestens ein Konto oder mindestens eine Sitzung durchgeführt wird, das bzw. die nicht als angreifergesteuertes Konto oder angreifergesteuerte Sitzung kategorisiert ist.

4. Verfahren nach einem der Ansprüche 1 bis 3, wobei das Blockieren des Benutzerkontos oder der Benutzersitzung hinsichtlich der Durchführung der Inkriminierungsaktion mindestens eines von Folgendem umfasst:
Blockieren einer Aktion, die konfiguriert ist, um bei Ausführung ein zusätzliches Benutzerkonto zu dem Rechensystem (102) hinzuzufügen;
Blockieren einer Aktion, die konfiguriert ist, um bei Ausführung einen spezifizierten Prozess auszuführen;
Blockieren einer Aktion, die konfiguriert ist, um bei Ausführung eine Ressourcenkonfiguration in dem Rechensystem (102) zu ändern;
Blockieren einer Aktion, die konfiguriert ist, um bei Ausführung eine Ressource in einer Cloud-Computing-Umgebung zu erstellen;
Blockieren einer Aktion, die konfiguriert ist, um bei Ausführung eine Internetverbindung anzufordern; oder
Blockieren einer Aktion, die konfiguriert ist, um bei Ausführung Daten über eine Internetverbindung zu übertragen;
wobei das Blockieren des Benutzerkontos oder der Benutzersitzung hinsichtlich der Durchführung der Inkriminierungsaktion optional ferner mindestens eines von Folgendem umfasst:
Ändern einer Verknüpfung in dem Rechensystem zwischen einer Rolle und dem Benutzerkonto;
Untersagen des Änderns einer Verknüpfung in dem Rechensystem (102) zwischen einer Rolle und einem anderen Benutzerkonto als dem Benutzerkonto;
Verhindern der Erstellung einer virtuellen Maschine;
Untersagen von E-Mail-Aktivität von einer spezifizierten IP-Adresse;
Untersagen von E-Mail-Aktivität aus einer spezifizierten Shell; oder
Untersagen von E-Mail-Aktivität aus einer spezifizierten Web-App.

5. Verfahren nach einem der Ansprüche 1 bis 4, umfassend mindestens eines von Folgendem:
das Blockieren ist abgeschlossen, bevor irgendein Sicherheitsalarm als Reaktion auf die Durchführung des mindestens einen Vorläuferereignisses automatisch ausgelöst wird; oder
das Blockieren ist abgeschlossen, bevor irgendein Sicherheitsalarm, der als Reaktion auf die Durchführung des mindestens einen Vorläuferereignisses automatisch ausgelöst wird, als ein Teil eines Vorfalls designiert wurde;
wobei optional in dem Rechensystem (102) kein Alarm als Reaktion auf die Durchführung des mindestens einen Vorläuferereignisses ausgelöst wird.

6. Verfahren nach einem der Ansprüche 1 bis 5, ferner umfassend:
Ermitteln, dass ein Vorläuferzustand in dem Rechensystem ebenfalls mit der Inkriminierungsaktion verknüpft ist; und
Verifizieren, dass der Vorläuferzustand in dem Rechensystem (102) vorliegt, bevor das Benutzerkonto oder die Benutzersitzung hinsichtlich der Durchführung der Inkriminierungsaktion in dem Rechensystem blockiert wird.

7. Rechensystem (102), umfassend:
mindestens einen digitalen Speicher (112);
eine erste Beschreibung (464), die sich in dem mindestens einen digitalen Speicher (112) befindet und diesen konfiguriert, wobei die erste Beschreibung (464) eine Vorläufersequenz (402) eines oder mehrerer Vorläuferereignisse (212, 132) darstellt;
eine zweite Beschreibung (442), die sich in dem mindestens einen digitalen Speicher (112) befindet und diesen konfiguriert, wobei die zweite Beschreibung (442) zweite Daten (118) umfasst, die eine Inkriminierungsaktion darstellen, die sich von der Vorläufersequenz (402) unterscheidet;
mindestens einen Prozessor (110), der mit dem mindestens einen digitalen Speicher (112) wirkverbunden ist, wobei der mindestens eine Prozessor (110) konfiguriert ist, um ein Verfahren (700) zur angreiferfokussierten granularen Aktionsunterbrechung durchzuführen, das Folgendes umfasst: (a) Beobachten dritter Daten (118), die eine Durchführung (306) der Vorläufersequenz (402) durch ein Benutzerkonto oder eine Benutzersitzung (130) darstellen, (b) Erkennen vierter Daten (118), die darstellen, dass die Inkriminierungsaktion (308) nach der Durchführung (306) der Vorläufersequenz (402) durch das Benutzerkonto oder die Benutzersitzung (130) nicht durch das Benutzerkonto oder die Benutzersitzung (130) durchgeführt wurde (306), oder Erkennen eines Fehlens fünfter Daten (118), die darstellen, dass die Inkriminierungsaktion (308) nach der Durchführung der Vorläufersequenz durch das Benutzerkonto oder die Benutzersitzung (130) durch das Benutzerkonto oder die Benutzersitzung durchgeführt wurde, oder beides, (c) Feststellen (504), dass die Inkriminierungsaktion (308) nach der Durchführung (306) der Vorläufersequenz (402) mindestens dreimal wahrscheinlicher durch ein angreifergesteuertes Konto oder eine angreifergesteuerte Sitzung durchgeführt wird als durch ein nicht-angreifergesteuertes Konto oder eine nicht-angreifergesteuerte Sitzung, und (d) Blockieren des Benutzerkontos oder der Benutzersitzung hinsichtlich der Durchführung der Inkriminierungsaktion (308), während (e) eine Erlaubnis (404) für das Benutzerkonto oder die Benutzersitzung aufrechterhalten wird, eine Ausführung der Inkriminierungsaktion zu versuchen, indem die tatsächliche Ausführung der Inkriminierungsaktion blockiert wird, und (f) eine Erlaubnis für das Benutzerkonto oder die Benutzersitzung aufrechterhalten wird, eine zusätzliche Aktion auszuführen, die sich von der Inkriminierungsaktion (308) unterscheidet und sich von jedem Teil der Vorläufersequenz (402) unterscheidet;
wobei das Feststellen optional das Erhalten einer Wahrscheinlichkeit umfasst, dass das Benutzerkonto oder die Benutzersitzung die Inkriminierungsaktion vor der Durchführung der Vorläufersequenz durch das Benutzerkonto oder die Benutzersitzung durchgeführt hat.

8. Rechensystem nach Anspruch 7, wobei der mindestens eine Prozessor auch konfiguriert ist, um die erste Beschreibung und die zweite Beschreibung zu bilden, zumindest teilweise durch rechnerisches Analysieren von mindestens einem von Folgendem:
einer nicht leeren Menge von Ereignissen und Alarmen;
einer nicht leeren Menge von Alarmen; oder
einem nicht leeren Ereignisprotokoll.

9. Rechensystem nach Anspruch 7 oder Anspruch 8, wobei der mindestens eine Prozessor auch konfiguriert ist, um die erste Beschreibung und die zweite Beschreibung zumindest teilweise zu bilden, indem er mit einem Korrelationsmodell Kandidaten-Vorläuferereignisse mit einer Kandidaten-Inkriminierungsaktion korreliert, wobei das Korrelationsmodell optional mindestens eines von Folgendem umfasst: ein statistisches Modell oder ein Modell für maschinelles Lernen.

10. Rechensystem nach einem der Ansprüche 7 bis 9, wobei der mindestens eine Prozessor auch konfiguriert ist, um die erste Beschreibung und die zweite Beschreibung zumindest teilweise zu bilden durch Herausfiltern einer Kandidaten-Inkriminierungsaktion nach dem Bestimmen, dass die Kandidaten-Inkriminierungsaktion um eine Schwellenwertwahrscheinlichkeit wahrscheinlicher durch ein nicht-angreifergesteuertes Benutzerkonto oder eine nicht-angreifergesteuerte Benutzersitzung durchgeführt wird als durch ein angreifergesteuertes Benutzerkonto oder eine angreifergesteuerte Benutzersitzung.

11. Rechensystem nach einem der Ansprüche 7 bis 10, wobei das Feststellen das Bestätigen umfasst, dass eine Angreiferwahrscheinlichkeit der Inkriminierungsaktion das N-Fache einer Nicht-Angreiferwahrscheinlichkeit der Inkriminierungsaktion beträgt, wobei N mindestens fünfzehn ist, wobei die Angreiferwahrscheinlichkeit aus einer Wahrscheinlichkeit berechnet wird, dass die Inkriminierungsaktion durch ein angreifergesteuertes Konto oder eine angreifergesteuerte Benutzersitzung durchgeführt wird, und die Nicht-Angreiferwahrscheinlichkeit aus einer Wahrscheinlichkeit berechnet wird, dass die Inkriminierungsaktion durch mindestens ein Konto oder mindestens eine Benutzersitzung durchgeführt wird, die sich von dem Benutzerkonto oder der Benutzersitzung unterscheiden, das bzw. die nicht als ein angreifergesteuertes Konto oder eine angreifergesteuerte Sitzung kategorisiert ist.

12. Computerlesbare Speichervorrichtung (112), die mit Daten und Anweisungen konfiguriert ist, welche bei Ausführung durch einen Prozessor (110) ein Verfahren zur angreiferfokussierten granularen Aktionsunterbrechung in einem Rechensystem (102) ausführen, wobei das Verfahren automatisch Folgendes umfasst:
Beobachten von Daten (118), die im Rechensystem (102) durch ein Benutzerkonto oder eine Benutzersitzung (130) eine Durchführung einer Vorläufersequenz (402) eines oder mehrerer Ereignisse (132) darstellen;
Erkennen, dass der Vorläufer (212) durch einen Verknüpfungsmechanismus (324) in dem Rechensystem (102) mit einer Inkriminierungsaktion (308) verknüpft ist, die nach der Durchführung der Vorläufersequenz (402) noch nicht durch das Benutzerkonto oder die Benutzersitzung durchgeführt wurde;
Feststellen, dass die Inkriminierungsaktion nach der Durchführung der Vorläufersequenz (402) mindestens viermal wahrscheinlicher durch ein angreifergesteuertes Konto oder eine angreifergesteuerte Sitzung (322) durchgeführt wird, als dass die Inkriminierungsaktion durch ein nicht-angreifergesteuertes Konto oder eine nicht-angreifergesteuerte Sitzung (316) durchgeführt wird; und
Blockieren des Benutzerkontos oder der Benutzersitzung hinsichtlich der Durchführung der Inkriminierungsaktion (308) in dem Rechensystem (102), während in dem Rechensystem (102) eine Erlaubnis für das Benutzerkonto oder die Benutzersitzung aufrechterhalten wird, eine Ausführung (406) der Inkriminierungsaktion zu versuchen, indem die tatsächliche Ausführung der Inkriminierungsaktion blockiert wird, und in dem Rechensystem (102) eine Erlaubnis für das Benutzerkonto oder die Benutzersitzung aufrechterhalten wird, eine zusätzliche Aktion auszuführen, die sich von der Inkriminierungsaktion (308) unterscheidet und sich von jedem Teil des Vorläufers unterscheidet;
wobei das Feststellen optional das Feststellen umfasst, dass die Inkriminierungsaktion (308) nach der Durchführung der Vorläufersequenz (402) mindestens zehnmal wahrscheinlicher durch ein angreifergesteuertes Konto oder eine angreifergesteuerte Sitzung (322) durchgeführt wird, als dass die Inkriminierungsaktion (308) vor der Durchführung der Vorläufersequenz (402) durch das Benutzerkonto oder die Benutzersitzung (130) durch das Benutzerkonto oder die Benutzersitzung (130) durchgeführt wird.

13. Computerlesbare Speichervorrichtung nach Anspruch 12, wobei das Verfahren ferner das Erfassen eines Versuchs durch das Benutzerkonto oder die Benutzersitzung umfasst, die blockierte Inkriminierungsaktion durchzuführen, und als Reaktion auf das Erfassen des Versuchs das Einschränken einer Fähigkeit des Benutzerkontos oder der Benutzersitzung zusätzlich zu dem Blockieren des Benutzerkontos oder der Benutzersitzung hinsichtlich der Durchführung der Inkriminierungsaktion, und wobei das Einschränken der Fähigkeit mindestens eines von Folgendem umfasst:
Deaktivieren des Benutzerkontos oder der Benutzersitzung;
Hinzufügen einer Authentifizierungsanforderung zu dem Benutzerkonto oder der Benutzersitzung;
Hinzufügen einer Autorisierungsanforderung zu dem Benutzerkonto oder der Benutzersitzung; oder
Simulieren einer simulierten Durchführung der blockierten Inkriminierungsaktion für das Benutzerkonto oder die Benutzersitzung und nicht tatsächliches Durchführen der blockierten Inkriminierungsaktion.

14. Computerlesbare Speichervorrichtung nach Anspruch 12 oder Anspruch 13, wobei das Verfahren ferner das Erhalten, zumindest teilweise durch Ausführen eines Modells für maschinelles Lernen, von mindestens einem von Folgendem umfasst:
einer Wahrscheinlichkeit, dass die Inkriminierungsaktion durch ein angreifergesteuertes Konto oder eine angreifergesteuerte Sitzung durchgeführt wird; oder
einer Wahrscheinlichkeit, dass die Inkriminierungsaktion durch ein Konto oder eine Sitzung durchgeführt wird, das bzw. die nicht als angreifergesteuertes Konto oder angreifergesteuerte Sitzung kategorisiert ist.

15. Computerlesbare Speichervorrichtung nach einem der Ansprüche 12 bis 14, wobei das Verfahren ferner umfasst:
Erfassen eines Versuchs durch das Benutzerkonto oder die Benutzersitzung, die blockierte Inkriminierungsaktion durchzuführen; und
als Reaktion auf das Erfassen des Versuchs, automatisches und proaktives Kategorisieren des Benutzerkontos oder der Benutzersitzung als ein angreifergesteuertes Konto oder eine angreifergesteuerte Sitzung.

## Revendications

1. Procédé de perturbation ciblée et granulaire des actions de l'attaquant dans un système informatique (102), le procédé comprenant automatiquement :
l'observation de données représentant une exécution, dans le système informatique (102) par un compte utilisateur ou une session utilisateur (130), d'au moins un événement précurseur (212) ;
la détection du fait que l'au moins un événement précurseur (212) est associé dans le système informatique (102) à une action d'incrimination qui n'a pas encore été exécutée par le compte utilisateur ou la session utilisateur (130) après l'exécution de l'au moins un événement précurseur (212) ;
l'établissement que, après l'exécution de l'au moins un événement précurseur (212), l'action d'incrimination (308) est plus susceptible d'être exécutée par un compte contrôlé par un attaquant ou une session utilisateur contrôlée par un attaquant (322) que par un compte non contrôlé par un attaquant ou une session utilisateur non contrôlée par un attaquant ; et
le blocage du compte utilisateur ou de la session utilisateur (130) empêchant l'exécution de l'action d'incrimination dans le système informatique (102), tout en conservant dans le système informatique (102) une autorisation (404) permettant au compte utilisateur ou à la session utilisateur de tenter d'exécuter (406) l'action d'incrimination (308) en bloquant l'exécution effective de l'action d'incrimination, et en conservant dans le système informatique (102) une autorisation (404) permettant au compte utilisateur ou à la session utilisateur (130) d'exécuter une action supplémentaire autre que l'action d'incrimination (308) et autre qu'une partie quelconque du précurseur (212).

2. Procédé selon la revendication 1, comprenant en outre :
la détection d'une tentative par le compte utilisateur ou la session utilisateur d'exécuter l'action d'incrimination bloquée ; et
en réponse à la détection de la tentative, la restriction d'une fonctionnalité du compte utilisateur ou de la session utilisateur en plus du blocage du compte utilisateur ou de la session utilisateur empêchant l'exécution de l'action d'incrimination.

3. Procédé selon la revendication 1 ou la revendication 2, dans lequel l'établissement comprend la confirmation que la probabilité pour un attaquant de commettre l'action d'incrimination est égale à N fois la probabilité pour un non-attaquant de commettre l'action d'incrimination, où N est au moins égal à cinq, la probabilité pour un attaquant est calculée à partir d'une probabilité que l'action d'incrimination soit exécutée par un compte contrôlé par un attaquant ou une session contrôlée par un attaquant, et la probabilité pour un non-attaquant est calculée à partir d'une probabilité que l'action d'incrimination soit exécutée par au moins un compte ou au moins une session qui n'est pas catégorisé(e) comme un compte contrôlé par un attaquant ou une session contrôlée par un attaquant.

4. Procédé selon l'une quelconque des revendications 1 à 3, dans lequel le blocage du compte utilisateur ou de la session utilisateur empêchant l'exécution de l'action d'incrimination comprend au moins l'une parmi les actions suivantes :
le blocage d'une action qui est configurée pour, lors de l'exécution, ajouter un compte utilisateur supplémentaire au système informatique (102) ;
le blocage d'une action qui est configurée pour, lors de l'exécution, exécuter un processus spécifié ;
le blocage d'une action qui est configurée pour, lors de l'exécution, modifier une configuration de ressources dans le système informatique (102) ;
le blocage d'une action qui est configurée pour, lors de l'exécution, créer une ressource dans un environnement informatique cloud ;
le blocage d'une action qui est configurée pour, lors de l'exécution, demander une connexion Internet ; ou
le blocage d'une action qui est configurée pour, lors de l'exécution, transmettre des données par le biais d'une connexion Internet ;
dans lequel le blocage du compte utilisateur ou de la session utilisateur empêchant l'exécution de l'action d'incrimination comprend en outre éventuellement au moins l'une parmi les actions suivantes :
la modification d'une association dans le système informatique entre un rôle et le compte utilisateur ;
l'interdiction de modifier une association dans le système informatique (102) entre un rôle et un compte utilisateur autre que le compte utilisateur ;
l'interdiction de créer une machine virtuelle ;
l'interdiction d'activité de messagerie à partir d'une adresse IP spécifiée ;
l'interdiction d'activité de messagerie à partir d'une interface système spécifiée ; ou
l'interdiction d'activité de messagerie à partir d'une application web spécifiée.

5. Procédé selon l'une quelconque des revendications 1 à 4, comprenant au moins l'une parmi les actions suivantes :
le blocage est effectué avant qu'une alerte de sécurité ne soit automatiquement déclenchée en réponse à l'exécution de l'au moins un événement précurseur ; ou
le blocage est effectué avant qu'une alerte de sécurité qui est automatiquement déclenchée en réponse à l'exécution de l'au moins un événement précurseur n'ait été désignée comme faisant partie d'un incident ;
dans lequel, éventuellement, aucune alerte n'est déclenchée dans le système informatique (102) en réponse à l'exécution de l'au moins un événement précurseur.

6. Procédé selon l'une quelconque des revendications 1 à 5, comprenant en outre :
la vérification qu'un état précurseur est également associé dans le système informatique à l'action d'incrimination ; et
la vérification que l'état précurseur est présent dans le système informatique (102) avant le blocage du compte utilisateur ou de la session utilisateur empêchant l'exécution de l'action d'incrimination dans le système informatique.

7. Système informatique (102), comprenant :
au moins une mémoire numérique (112) ;
une première description (464) résidant dans et configurant l'au moins une mémoire numérique (112), la première description (464) représentant une séquence précurseur (402) d'un ou plusieurs événements précurseurs (212, 132) ;
une seconde description (442) résidant dans et configurant l'au moins une mémoire numérique (112), la seconde description (442) comprenant des deuxièmes données (118) représentant une action d'incrimination qui est distincte de la séquence précurseur (402) ;
au moins un processeur (110) en communication opérationnelle avec l'au moins une mémoire numérique (112), l'au moins un processeur (110) étant configuré pour exécuter un procédé de perturbation ciblée et granulaire des actions de l'attaquant (700) qui comprend (a) l'observation de troisièmes données (118) qui représentent une exécution (306) de la séquence précurseur (402) par un compte utilisateur ou une session utilisateur (130), (b) la détection de quatrièmes données (118) qui indiquent que l'action d'incrimination (308) n'a pas été exécutée (306) par le compte utilisateur ou la session utilisateur (130) après l'exécution (306) de la séquence précurseur (402) par le compte utilisateur ou la session utilisateur (130), ou la détection d'une absence de cinquièmes données (118) qui indiquent que l'action d'incrimination (308) a été exécutée par le compte utilisateur ou la session utilisateur après l'exécution de la séquence précurseur par le compte utilisateur ou la session utilisateur (130), ou les deux, (c) l'établissement (504) que, après l'exécution (306) de la séquence précurseur (402), l'action d'incrimination (308) est au moins trois fois plus susceptible d'être exécutée par un compte contrôlé par un attaquant ou une session contrôlée par un attaquant que par un compte non contrôlé par un attaquant ou une session non contrôlée par un attaquant, et (d) le blocage du compte utilisateur ou de la session utilisateur empêchant l'exécution de l'action d'incrimination (308), tout en (e) conservant une autorisation (404) permettant au compte utilisateur ou à la session utilisateur de tenter d'exécuter l'action d'incrimination en bloquant l'exécution effective de l'action d'incrimination, et (f) la conservation d'une autorisation permettant au compte utilisateur ou à la session utilisateur d'exécuter une action supplémentaire autre que l'action d'incrimination (308) et autre qu'une partie quelconque de la séquence précurseur (402) ;
dans lequel l'établissement comprend éventuellement l'obtention d'une probabilité selon laquelle le compte utilisateur ou la session utilisateur a exécuté l'action d'incrimination avant l'exécution de la séquence précurseur par le compte utilisateur ou la session utilisateur.

8. Système informatique selon la revendication 7, dans lequel l'au moins un processeur est également configuré pour former la première description et la seconde description au moins en partie en analysant par calcul au moins l'un parmi les éléments suivants :
ensemble non vide d'événements et d'alertes ;
ensemble non vide d'alertes ; ou
journal d'événements non vide.

9. Système informatique selon la revendication 7 ou la revendication 8, dans lequel l'au moins un processeur est également configuré pour former la première description et la seconde description au moins en partie en corrélant, avec un modèle de corrélation, des événements précurseurs candidats avec une action d'incrimination candidate, dans lequel le modèle de corrélation comprend éventuellement au moins l'un parmi les éléments suivants : un modèle statistique ou un modèle d'apprentissage automatique.

10. Système informatique selon l'une quelconque des revendications 7 à 9, dans lequel l'au moins un processeur est également configuré pour former la première description et la seconde description au moins en partie en éliminant par filtrage une action d'incrimination candidate après avoir déterminé que l'action d'incrimination candidate est plus susceptible, selon un seuil de probabilité, d'être exécutée par un compte utilisateur non contrôlé par un attaquant ou une session utilisateur non contrôlée par un attaquant que par un compte utilisateur contrôlé par un attaquant ou une session utilisateur contrôlée par un attaquant.

11. Système informatique selon l'une quelconque des revendications 7 à 10, dans lequel l'établissement comprend la confirmation que la probabilité pour un attaquant de commettre l'action d'incrimination est égale à N fois la probabilité pour un non-attaquant de commettre l'action d'incrimination, où N est au moins égal à quinze, la probabilité pour un attaquant est calculée à partir d'une probabilité que l'action d'incrimination soit exécutée par un compte contrôlé par un attaquant ou une session utilisateur contrôlée par un attaquant, et la probabilité pour un non-attaquant est calculée à partir d'une probabilité que l'action d'incrimination soit exécutée par au moins un compte ou au moins une session utilisateur autre que le compte utilisateur ou la session utilisateur qui n'est pas catégorisé(e) comme un compte contrôlé par un attaquant ou une session contrôlée par un attaquant.

12. Dispositif de stockage lisible par ordinateur (112) configuré avec des données et des instructions qui lors de l'exécution par un processeur (110) exécutent un procédé de perturbation ciblée et granulaire des actions de l'attaquant dans un système informatique (102), le procédé comprenant automatiquement :
l'observation de données (118) représentant une exécution, dans le système informatique (102) par un compte utilisateur ou une session utilisateur (130), d'une séquence précurseur (402) d'un ou plusieurs événements (132) ;
la détection du fait que le précurseur (212) est associé, par un mécanisme d'association (324) dans le système informatique (102), à une action d'incrimination (308) qui n'a pas encore été exécutée par le compte utilisateur ou la session utilisateur après l'exécution de la séquence précurseur (402) ;
l'établissement que, après l'exécution de la séquence précurseur (402), l'action d'incrimination est au moins quatre fois plus susceptible d'être exécutée par un compte contrôlé par un attaquant ou une session contrôlée par un attaquant (322) par rapport à l'action d'incrimination qui doit être exécutée par un compte non contrôlé par un attaquant ou une session non contrôlée par un attaquant (316) ; et
le blocage du compte utilisateur ou de la session utilisateur empêchant l'exécution de l'action d'incrimination (308) dans le système informatique (102), tout en conservant dans le système informatique (102) une autorisation permettant au compte utilisateur ou à la session utilisateur de tenter d'exécuter (406) l'action d'incrimination en bloquant l'exécution effective de l'action d'incrimination, et en conservant dans le système informatique (102) une autorisation permettant au compte utilisateur ou à la session utilisateur d'exécuter une action supplémentaire autre que l'action d'incrimination (308) et autre qu'une partie quelconque du précurseur ;
dans lequel l'établissement comprend éventuellement l'établissement qu'après l'exécution de la séquence précurseur (402), l'action d'incrimination (308) est au moins dix fois plus susceptible d'être exécutée par un compte contrôlé par un attaquant ou une session contrôlée par un attaquant (322) par rapport à l'action d'incrimination (308) qui devait être exécutée par le compte utilisateur ou la session utilisateur (130) avant l'exécution de la séquence précurseur (402) par le compte utilisateur ou la session utilisateur (130).

13. Dispositif de stockage lisible par ordinateur selon la revendication 12, dans lequel le procédé comprend en outre la détection d'une tentative par le compte utilisateur ou la session utilisateur d'exécuter l'action d'incrimination bloquée, et en réponse à la détection de la tentative, la restriction d'une fonctionnalité du compte utilisateur ou de la session utilisateur en plus du blocage du compte utilisateur ou de la session utilisateur empêchant l'exécution de l'action d'incrimination, et dans lequel la restriction de la fonctionnalité comprend au moins l'une parmi les actions suivantes :
la désactivation du compte utilisateur ou de la session utilisateur ;
l'ajout d'une exigence d'authentification au compte utilisateur ou à la session utilisateur ;
l'ajout d'une exigence d'autorisation au compte utilisateur ou à la session utilisateur ; ou
la simulation, pour le compte utilisateur ou la session utilisateur, d'une exécution simulée de l'action d'incrimination bloquée et sans pour autant exécuter réellement l'action d'incrimination bloquée.

14. Dispositif de stockage lisible par ordinateur selon la revendication 12 ou la revendication 13, dans lequel le procédé comprend en outre l'obtention, au moins en partie par l'exécution d'un modèle d'apprentissage automatique, d'au moins l'une parmi les probabilités suivantes :
une probabilité que l'action d'incrimination soit exécutée par un compte contrôlé par un attaquant ou une session contrôlée par un attaquant ; ou
une probabilité que l'action d'incrimination soit exécutée par un compte ou une session qui n'est pas catégorisé(e) comme un compte contrôlé par un attaquant ou une session contrôlée par un attaquant.

15. Dispositif de stockage lisible par ordinateur selon l'une quelconque des revendications 12 à 14, dans lequel le procédé comprend en outre :
la détection d'une tentative par le compte utilisateur ou la session utilisateur d'exécuter l'action d'incrimination bloquée ; et
en réponse à la détection de la tentative, la catégorisation automatique et proactive du compte utilisateur ou de la session utilisateur comme un compte contrôlé par un attaquant ou une session contrôlée par un attaquant.
